# EUROPEAN PATENT APPLICATION

(11) **EP 4 481 852 A1**
(43) Date of publication of application: **25.12.2024**
(21) Application number: 22959932.9
(22) Date of filing: 28.09.2022
(51) Int. Cl.: H01M 4/525

(54) **POSITIVE ELECTRODE ACTIVE MATERIAL, POSITIVE ELECTRODE SHEET, ELECTROCHEMICAL ENERGY STORAGE DEVICE, SECONDARY BATTERY, ELECTRICAL DEVICE, AND PREPARATION METHOD**

(71) Applicant: Contemporary Amperex Technology Co., Limited, Ningde, Fujian 352100 (CN)
(72) Inventor: LI, Sheng, Ningde, Fujian 352100 (CN); NI, Huan, Ningde, Fujian 352100 (CN); ZHONG, Hua, Ningde, Fujian 352100 (CN)
(74) Representative: Frick, Robert
(86) International application number: PCT/CN2022/122177
(87) International publication number: WO 2024/065286

(57) **Abstract**

This application discloses a positive electrode active material including particles A and particles B, where the particles A have a monocrystalline or monocrystalline-like structure, and the particles B are secondary particles including a plurality of primary particles.Dᵥ50 of the particles A is less than Dᵥ50 of the particles B, and a mass percentage of the particles A is greater than or equal to a mass percentage of the particles B, whereDᵥ50 denotes a particle size corresponding to a cumulative volume distribution percentage of a material reaching 50%.

## Description

### TECHNICAL FIELD

This application relates to the field of energy technologies and the field of secondary battery technologies, and further relates to a positive electrode active material, a positive electrode plate, an electrochemical energy storage apparatus, a secondary battery, an electric apparatus, and a preparation method.

### BACKGROUND

The description herein merely provides background information related to this application and does not necessarily constitute prior art.

With the implementation of carbon neutrality and peak carbon strategy goals, the new energy industry has been developing rapidly in recent years. However, current new energy vehicles suffer from low range and poor lifespan, which greatly limits the development of the new energy industry and becomes a stumbling block on the road to achieving carbon neutrality and peak carbon attainment. Therefore, it is urgent to develop an energy storage apparatus with high energy density and long service life.

High-nickel materials (for example, high-nickel ternary materials) characterized by high capacity and low cycle fading have received extensive attention from the industry. However, the current high watt-hour costs of high-nickel materials restrict their promotion and application.

### SUMMARY

In view of the foregoing problems, this application provides a positive electrode active material, a positive electrode plate, an electrochemical energy storage apparatus, a secondary battery, an electric apparatus, and a preparation method. The positive electrode active material is a high-nickel positive electrode material having small particles and large particles with a specific structure, and the percentage of the small particles is higher than that of the large particles. The positive electrode plate prepared has a high mass-specific capacity and excellent structural stability. Further, at the cell level, the mass energy density and cycle life of the cell can be significantly improved, and side reactions with the electrolyte can be reduced, reducing the gas generation of the cell.

In a first aspect, this application provides a positive electrode active material including particles A and particles B, where molar ratio R_{Ni/Li} of element nickel to element lithium in each of the particles A and the particles B is independently greater than or equal to 0.33. The particles A have a monocrystalline or monocrystalline-like structure, and the particles B are secondary particles including a plurality of primary particles, where Dᵥ50 of the particles A is less than Dᵥ50 of the particles B, and a mass percentage of the particles A is greater than or equal to a mass percentage of the particles B.

DᵥN denotes a particle size corresponding to a cumulative volume distribution percentage of a material reaching N%, N being a value selected from 0-100.

For positive electrode materials, conventional high-nickel materials (for example, high-nickel ternary materials) are prone to material cracking during cycling, and the cracking degree tends to deepen at high voltages, leading to a shorter cycle life. In addition, the enhanced oxidation activity of the positive electrode during storage makes the positive electrode prone to intensive chemical reactions with the electrolyte, resulting in a decrease in cell life and an increase in gas generation per unit capacity. In this application, the positive electrode active material includes high-nickel positive electrode materials with different particle sizes, where small particles and large particles are distinguished by Dᵥ50, particles A having a monocrystalline or monocrystalline-like structure are used as the small particles, particles B formed by agglomeration of primary particles are used as the large particles, and the mass percentage of the particles A is also controlled to be higher than that of the particles B. The particles A of a special crystal phase structure have a homogeneous phase system or a near homogeneous bulk, and in the process of lithium deintercalation or intercalation of the material, generation of stress is not likely to occur in the material, and it is not likely to cause cracking of the material under stress, which is therefore more conducive to improving the cycling and storage performance of the cell under high-voltage conditions. The particles B are formed by agglomeration of primary particles, which is conducive to improving the power performance and compacted density. Through the control of the percentage of the particles A relative to the particles B, the percentage of the particles B is less than that of the particles A, which can reduce the stress caused by the contraction and expansion of the lattice of large particles. This helps to prevent the cracking of the positive electrode material under the high-voltage conditions, avoids the formation of new interfaces due to the cracking of the material, and further avoids deterioration of the cell performance and increase in gas generation due to side reactions between the new interfaces and the electrolyte, thus enhancing the cycling stability under the high-voltage conditions and extending the service life of the cell. Further, an increase in the percentage of the small-sized particles A is also conducive to increasing the capacity retention rate of the cell after storage and extending the storage calendar life of the material. In addition, compared to a hybrid system, use of the small-sized particles A in a pure monocrystalline system can significantly reduce the compacted density of the electrode plate using the material and the power performance of the cell. An increase of the compacted density of the electrode plate can increase the volumetric specific capacity of the material, so that the cell in a smaller volume has a longer service life.

In some embodiments of this application, the particle size of the particles A satisfies 2 µm ≤ Dᵥ50 ≤ 5 µm, and the particle size of the particles B satisfies 5 µm < Dᵥ50 ≤ 25 µm.

Optionally, Span value of the particles A is greater than Span value of the particles B, where Span = (Dᵥ90-Dᵥ10)/Dᵥ50.

Optionally, the Span value of the particles A is selected from 0.1-3.0; and the Span value of the particles B is selected from 0.1-3.0.

Optionally, the particle size of the particles B satisfies 8 µm < Dᵥ50 ≤ 20 µm.

With the respective particle sizes of the particles A and the particles B controlled in a relatively appropriate range, it is conducive to better improving the high-voltage tolerance of the positive electrode material, reducing the stress caused by the large particles, thereby better preventing the cracking of the positive electrode material under the high-voltage conditions, enhancing the cycling stability under the high-voltage conditions, avoiding the increase in gas generation, and extending the service life of the cell. Further, it is more conducive to increasing the specific capacity and mass energy density of the positive electrode plate. In addition, the broadening coefficient Span (Span = (Dᵥ90-Dᵥ10)/Dᵥ50) of a multi-particle system is further defined to indicate the dispersion degree of the particle sizes of the particles, and a larger broadening coefficient Span indicates a wider particle distribution of the material. With a proper combination of particle size grades and broadening coefficients for the large and small particles, a higher compacted density of the electrode plate using the material can be more conducive to increasing the volumetric specific capacity of the material, so that the cell in a smaller volume has a longer service life.

In some embodiments of this application, the particles B include particles B1 and particles B2, where the particle size of the particles B1 satisfies 5 µm < Dᵥ50 ≤ 10 µm, and the particle size of the particles B2 satisfies 10 µm < Dᵥ50 ≤ 25 µm.

Optionally, the weight percentage of the particles B1 in the particles B is selected from 50-100%.

Optionally, the weight percentage of the particles B2 in the particles B is selected from 0-50%.

Optionally, the Span value of the particles A is selected from 0.1-2.0; the Span value of the particles B1 is selected from 0.1-2.0; and the Span value of the particles B2 is selected from 0.1-2.0; where Span = (Dᵥ90-Dᵥ10)/Dᵥ50.

On the basis of distinguishing small particles (particles A) from large particles (particles B), the particles B are further divided into particles B1 and particles B2, so that Dᵥ50 of the particles B1 is less than Dᵥ50 of the particles B2. In this way, it is possible to include particles in three size grades in the positive electrode active material and provide finer control over the particle size of the larger-sized particles. Further, with a proper control of the percentage of particles with different particle sizes and the broadening coefficient Span to improve the compacted density and increase the specific capacity and mass energy density of the positive electrode plate, a proper control of the percentage of the particles B1 with intermediate sizes can further improve the power performance, prevent overly dense buildup from affecting the infiltration of the electrolyte, and prevent the formation of concentration gradients due to the inability of the electrolyte to come into contact with the internal active materials of the electrode plate, resulting in unfavorable constraints on lithium-ion transport.

In some embodiments of this application, the particles B include particles B 1', particles B2', and particles B3', where the particle size of the particles B1' satisfies 8 µm < Dᵥ50 ≤ 12 µm, the particle size of the particles B2' satisfies 12 µm < Dᵥ50 ≤ 15 µm, and the particle size of the particles B3' satisfies 15 µm < Dᵥ50 ≤ 20 µm.

Optionally, the weight percentage of the particles B1' in the particles B is selected from 40-80%.

Optionally, the weight percentage of the particles B2' in the particles B is selected from 20-30%.

Optionally, the weight percentage of the particles B3' in the particles B is selected from 0-30%.

Optionally, the Span value of the particles A is selected from 0.1-2.0; the Span value of the particles B1' is selected from 0.1-2.0; the Span value of the particles B2' is selected from 0.1-2.0; and the Span value of the particles B3' is selected from 0.1-2.0; where Span = (Dᵥ90-Dᵥ10)/Dᵥ50.

On the basis of distinguishing small particles (particles A) from large particles (particles B), the particles B are further divided into particles B 1', particles B2', and particles B3' with increasing Dᵥ50, allowing inclusion of particles in four size grades in the positive electrode active material and finer control over the particle size of the larger-sized particles. Further, with a proper control of the percentage of the four particles and the broadening coefficient Span, a proper control of the percentages of the particles B1' and the particles B2' with intermediate sizes can improve the power performance, prevent overly dense buildup from affecting the infiltration of the electrolyte, and prevent the formation of concentration gradients due to the inability of the electrolyte to come into contact with the internal active materials of the electrode plate, resulting in unfavorable constraints on lithium-ion transport.

In some embodiments of this application, the particles A and the particles B each independently include the following combination of elements NiₓCo_{y}M_{1-x-y}, where x ≥ 0.4, y >_ 0, (1-x-y) >_ 0, and the element M includes one or both of Mn and Al.

Optionally, 0.40 ≤ x ≤ 1.00, 0 ≤ y <_ 0.15, and (1-x-y) ≥ 0.

Optionally, 0.50 ≤ x ≤ 1.00; and optionally, 0.60 ≤ x ≤ 1.00.

Optionally, y > 0; and optionally, 0 < y <_ 0.15.

Optionally, (1-x-y) > 0.

Optionally, y > 0 and (1-x-y) > 0.

Optionally, the particles A and the particles B each independently include a material with a chemical formula Liₖ₋ₐQₐ(NiₓCo_{y}M_{1-x-y})_{1-z}N_{z}O_{2-c}X_{c}, where 0.9 ≤ k ≤ 1.1, 0 ≤ a ≤ 0.2, 0.60 ≤ x ≤ 1.00, 0 ≤ y ≤ 0.15, 0 ≤ (1-x-y), 0 ≤ z ≤ 0.5, 0 ≤ c ≤ 1, the element M includes one or both of Mn and Al, the element Q includes one or more of Na, K, Rb, and Ca, the element N includes one or more of Al, Ti, Zr, Nb, Sr, Sb, Y, Ba, Co, Mn, Mg, W, Si, Mo, P, and C, and the element X includes one or more of B, F, S, and Cl.

Optionally, 0.92 ≤ k ≤ 1.08; optionally, 0.95 ≤ k ≤ 1.05; optionally, 0.96 ≤ k ≤ 1.04; optionally, 0.98 ≤ k ≤ 1.02; optionally, 0.99 ≤ k ≤ 1.01; and optionally, k = 1.

Optionally, 0.50 ≤ x ≤ 1.00; optionally, 0.60 ≤ x ≤ 1.00; and optionally, 0.70 ≤ x1 ≤ 1.00.

Optionally, 0 ≤ a ≤ 0.2, 0.60 ≤ x < 1.00, 0 < y <_ 0.15, 0 < (1-x-y), 0 ≤ z ≤ 0.5, and 0 ≤ c ≤ 1.

In some embodiments of this application, the nickel-lithium molar ratio R_{Ni/Li} in each of the particles A and the particles B is independently greater than or equal to 0.4.

Optionally, the nickel-lithium molar ratio R_{Ni/Li} in each of the particles A and the particles B is independently greater than or equal to 0.5.

Optionally, the nickel-lithium molar ratio R_{Ni/Li} in each of the particles A and the particles B is independently greater than or equal to 0.6.

Optionally, the nickel-lithium molar ratio R_{Ni/Li} in each of the particles A and the particles B is independently greater than or equal to 0.7.

Optionally, the nickel-lithium molar ratio R_{Ni/Li} in each of the particles A and the particles B is independently greater than or equal to 0.8.

Optionally, the nickel-lithium molar ratio R_{Ni/Li} in the particles A is selected from 0.7-1.0.

Optionally, the nickel-lithium molar ratio R_{Ni/Li} in the particles B is selected from 0.8-1.0.

Optionally, the nickel-lithium molar ratio R_{Ni/Li} in the particles B is selected from 0.8-0.96.

Conventional nickel-rich positive electrode materials (for example, nickel-rich ternary positive electrode materials) undergo changes in their unit cell parameters during cycling due to the occurrence of lithium deintercalation or intercalation. The changes in unit cell parameters can induce internal stress within the material. As the number of charge-discharge cycles increases, the internal stress accumulates, leading to phenomena such as structural phase transitions and particle cracking of the material and greatly compromising the reversible cycling of the material. In a high-voltage system, the degree of lithium deintercalation or intercalation in nickel-rich materials (for example, nickel-rich ternary materials) is further increased. In this application, the positive electrode active material may be a conventional nickel-rich ternary positive electrode material. In this application, doping of element N may be further introduced into the ternary positive electrode active material, which can reduce the degree of lattice change of the material and play a role in stabilizing the lattice, thereby improving the cycling performance of the nickel-rich ternary material. In addition, it is also helpful to avoid accelerated side reactions between new interfaces generated by cracking and the electrolyte, which is conducive to reducing the gas generation of the cell.

In some embodiments of this application, true densities of the particles A and the particles B each are independently greater than 4.0 g/cc.

Optionally, the true densities of the particles A and the particles B each are independently selected from 4.0-4.8 g/cc.

Optionally, the true density of the particles A each is independently selected from 4.6-4.8 g/cc.

Optionally, the true density of the particles B each is independently selected from 4.5-4.8 g/cc.

In this application, the true density is one of the main factors determining the compacted density of the positive electrode material. Proper control of the true densities of the particles A and the particles B is favorable to increase the volumetric specific capacity and the energy density of the positive electrode plate, so as to better improve the cell performance while alleviating the problem of material cracking under high voltage. For the multi-particle system with the gradation method of this application, a closer particle arrangement of the material indicates a higher theoretically achievable volumetric specific capacity of the positive electrode material.

In some embodiments of this application, the particles A and the particles B each independently include a body structure and an oxide layer enveloping at least a portion of the surface of the body structure;
where,
the body structure includes a material with a chemical formula Liₖ₁₋ₐ₁Qₐ₁(Niₓ₁Co_{y1}M_{1-X1-y1})_{1-z1}N_{z1}O₂, where 0.9 ≤ k1 ≤ 1.1, 0 ≤ a1 ≤ 0.20, 0.40 ≤ x1 ≤ 1.00, 0 ≤ y1 ≤ 0.15, 0 ≤ (1-xl-yl), 0 ≤ z1 ≤ 0.5, the element Q includes one or more of Na, K, Rb, and Ca, the element M includes one or both of Mn and Al, and the element N includes one or more of Al, Ti, Zr, Nb, Sr, Sb, Y, Ba, Co, Mn, Mg, Si, P, Mo, C, and W.

Optionally, 0.92 ≤ k1 ≤ 1.08; optionally, 0.95 ≤ k1 ≤ 1.05; optionally, 0.96 ≤ k1 ≤ 1.04; optionally, 0.98 ≤ k1 ≤ 1.02; optionally, 0.99 ≤ k1 ≤ 1.01; and optionally, k1 is equal to 1.

Optionally, 0.50 ≤ x1 ≤ 1.00; optionally, 0.60 ≤ x1 ≤ 1.00; optionally, 0.9 ≤ k2 ≤ 1.1, and 0.70 ≤ x1 ≤ 1.00.

Optionally, the element N includes one or more of Al, Ti, Zr, Nb, Sr, Sb, Y, Mg, and W.

Optionally, 0 ≤ a1 ≤ 0.20, 0.60 ≤ x1 < 1.00, 0 < y1 ≤ 0.15, 0 < (1-xl-yl), and 0 ≤ z1 ≤ 0.5.

The oxide layer includes a material with a chemical formula Liₖ₂₋ₐ₂Q'ₐ₂(Niₓ₂Co_{y2}M'_{1-x2-y2})_{1-z2}N'_{z2}O_{2-c2}X_{c2}, where 0 ≤ a2 ≤ 0.20, 0.40 ≤ x2 ≤ 1.00, 0 ≤ y2 ≤ 0.15, 0 ≤ (1-x2-y2), 0 < z2 ≤ 0.5, 0 ≤ c2 ≤ 1, the element Q' includes one or more of Na, K, Rb, and Ca, the element M' includes one or both of Mn and Al, the element N' includes one or more of Al, Ti, Zr, Nb, Sr, Sb, Y, Ba, Co, Mn, Mg, W, Mo, Si, C, and P, and the element X includes one or more of B, Cl, S, and F.

Optionally, 0.92 ≤ k2 ≤ 1.08; optionally, 0.95 ≤ k2 ≤ 1.05; optionally, 0.96 ≤ k2 ≤ 1.04; optionally, 0.98 ≤ k2 ≤ 1.02; optionally, 0.99 ≤ k2 ≤ 1.01; and optionally, k2 is equal to 1.

Optionally, 0.50 ≤ x2 ≤ 1.00; optionally, 0.60 ≤ x2 ≤ 1.00; and optionally, 0.70 ≤ x2 ≤ 1.00.

Optionally, Q'ₐ₂Niₓ₂Co_{y2}M'_{1-x-y} is the same as Qₐ₁Niₓ₁Co_{y1}M_{1-x1-y1}.

Optionally, the element N' includes one or more of Al, Ti, Zr, Sr, Sb, Mo, Nb, Mg, Y, and W.

Optionally, 0 ≤ a2 ≤ 0.20, 0.60 ≤ x2 < 1.00, 0 < y2 ≤ 0.15, 0 < (1-x2-y2), 0 < z2 ≤ 0.5, and 0 ≤ c2 ≤ 1.

In this application, the body structure of the positive electrode active material can be doped with the element Q' (for example, Na, K, Rb, and Ca), thereby increasing the lithium ion diffusion coefficient and reducing the lithium-nickel mixing. It is also possible to coat the surface of the positive electrode active material to form an oxide layer doped with a specific element N' on the surface of the particles, which can reduce the reactivity of the surface of the material with the electrolyte, reduce the release of oxygen from the material, improve the structural stability of the active material, improve the ionic conductivity, and also increase the capacity of the material. For example, the oxide layer is doped with elements such as Zr, Al, Mg, W, Mo, Co, Sr, Sb, and Nb, where the elements such as Mg, Ti, Al, and Mo can reduce the amount of lattice deformation of the material during charge-discharge cycles, thereby improving the structural stability of the material. For example, it is also possible to dope the oxide layer with elements such as B, F, and Cl to improve the capacity and rate performance. In addition, with the combination of material particle size design with material structural design, it is also possible to achieve higher specific capacity for the material and reduce the degree of side reactions and phase transitions between the positive electrode material and the electrolyte, enabling the battery to have a lower watt-hour cost and a longer cycle life. Compared to the structural design with a coating layer, the material without a coating layer is likely to have a large number of side reactions with the electrolyte at the interface, resulting in the oxidation of the electrolyte and the generation of gases such as carbon dioxide and oxygen. Additionally, without a coating layer, the layered structure on the surface of the positive electrode active material is more prone to transforming into a rock-salt structure, resulting in the loss of chemical reactivity on the surface of the material.

In some embodiments of this application, the thickness of the oxide layer is 0-100 nm.

Optionally, the thickness of the oxide layer is 1-100 nm.

Optionally, the thickness of the oxide layer is 1-20 nm.

In some embodiments of this application, the mass percentage of the oxide layer relative to the body structure is 0.01-5%.

Optionally, the mass percentage of the oxide layer relative to the body structure is 0.05-4%.

In some embodiments of this application, the mass percentage of the element N in the oxide layer in the positive electrode active material is 0.01-4%.

Optionally, the mass percentage of the element N in the oxide layer in the positive electrode active material is 0.05-4%.

With proper control of the amount of the surface oxide layer, such as the thickness of the oxide layer, the mass percentage of the oxide layer, the doping amount of the element N, and other parameters, it is possible to better achieve the foregoing doping and coating purposes, better regulate the chemical reactivity and structural stability of the material, better combine the material particle size design and the material structural design, give the material a higher specific capacity, and reduce the degree of side reactions and phase transitions between the positive electrode material and the electrolyte, enabling the battery to have a lower watt-hour cost and a longer cycle life.

In some embodiments of this application, an average specific surface area value of the positive electrode active material is 0.3-1.5 cm²/g.

With proper control of the overall specific surface area of the positive electrode active material, it is more favorable to increase the energy density as much as possible while increasing the compacted density of the positive electrode material.

In some embodiments of this application, the free lithium content in the positive electrode active material is less than 3000 ppm in mass ratio.

In this application, proper control of the free lithium (for example, lithium carbonate and lithium hydroxide) content in the positive electrode active material can avoid excessive gas generation during cycling under high-voltage conditions. If the free lithium content is high, acid-base neutralization reactions occur between the free lithium and hydrofluoric acid generated by the decomposition of the electrolyte during cycling under the high-voltage conditions, and a large amount of gas is generated, leading to cell swelling and pouch bulging, which is prone to cell safety accidents.

In some embodiments of this application, the ratio I003/I104 of the I003 grain content to the I104 grain content in the positive electrode active material is greater than or equal to 1.2 and is measured as a ratio of areas of characteristic peaks of I003 crystal plane to I104 crystal plane in an XRD pattern.

Optionally, I003/I104 is selected from 1.2-2.

Optionally, I003/I104 is selected from 1.3-2.

Optionally, I003/I104 is selected from 1.3-1.6.

With proper control of the ratio I003/I104 (for example, greater than or equal to 1.2) of the I003 grain content to the I104 grain content in the positive electrode active material, the degree of lithium-nickel mixing can be better controlled, preventing reduction of the reversible capacity and reduction of the diffusion coefficients of lithium ions resulted from element nickel in an excessive amount occupying lattice sites for element lithium.

In some embodiments of this application, in the particles B, at least some of the primary particles are in directional arrangement along the radial direction.

For the secondary spherical particles in this application, a specific directional arrangement of the primary particles can be made along the radial direction, thereby inhibiting the contraction and expansion that may occur under high voltages and avoiding the increase of internal stresses, better preventing the material from breakage under high voltages, and improving the cycling performance. A higher degree of directional arrangement along the radial direction indicates a lower degree of non-directional random arrangement, with more significant improvement in effectiveness.

In a second aspect, this application provides a positive electrode plate including a positive electrode current collector and a positive electrode active material layer disposed on at least one surface of the positive electrode current collector, the positive electrode active material layer including the positive electrode active material according to the first aspect of this application.

The positive electrode active material according to the first aspect of this application can be used to prepare a positive electrode plate with high nickel content. The particle size and content design of the positive electrode active material can be utilized to prevent the material from cracking under high-voltage conditions and improve the cycling and storage performance of the cell under the high-voltage conditions. Further, the design of the doping and/or the coating structure can be utilized to regulate the chemical reactivity and the structural stability of the material, which can achieve a higher specific capacity for the material and reduce the degree of side reactions and phase transitions between the positive electrode material and the electrolyte, enabling the battery to have a lower watt-hour cost and a longer cycle life.

In some embodiments of this application, the compacted density of the positive electrode plate is 3.3-3.7 g/cm³.

In this application, controlling the positive electrode plate at a more suitable compacted density can better prevent the material from cracking under the high-voltage conditions while giving the electrode plate better specific capacity and energy density. It should be understood that the compacted density of the positive electrode plate is also constrained by the true densities of the particles A and particles B contained therein. An increase of the compacted density of the electrode plate can increase the volumetric specific capacity of the material, so that the cell in a smaller volume has a longer service life.

In a third aspect, this application provides an electrochemical energy storage apparatus including the positive electrode plate according to the second aspect, a negative electrode plate, and a separator, where the separator is disposed between the positive electrode plate and the negative electrode plate.

In a fourth aspect, this application provides a secondary battery including at least one of the positive electrode plate according to the second aspect of this application and the electrochemical energy storage apparatus according to the third aspect of this application.

In a fifth aspect, this application provides an electric apparatus including at least one of the positive electrode plate according to the second aspect of this application, the electrochemical energy storage apparatus according to the third aspect of this application, and the secondary battery according to the fourth aspect of this application.

The positive electrode active material according to the first aspect of this application can be used to prepare a positive electrode plate with high nickel content and further prepare an electrochemical energy storage apparatus, a secondary battery, and an electric apparatus. The particle size and content design of the positive electrode active material can be utilized to prevent the material from cracking under high-voltage conditions and improve the cycling and storage performance of the cell under the high-voltage conditions. Further, the design of the doping and/or the coating structure can be utilized to regulate the chemical reactivity and the structural stability of the material, which can achieve a higher specific capacity for the material and reduce the degree of side reactions and phase transitions between the positive electrode material and the electrolyte, enabling the battery to have a lower watt-hour cost and a longer cycle life.

In a sixth aspect of this application, a preparation method of positive electrode active material is provided, including the following step: preparing the positive electrode active material by mixing the particles A and the particles B at a preset mass ratio, where the particles A and particles B are as defined in the first aspect of this application.

The particles A are prepared by a method including the following steps: mixing lithium hydroxide, nickel-cobalt-M precursor material NiₓCo_{y}M_{1-x-y}(OH)₂, an optional Q additive, and an optional N additive for primary sintering in the presence of oxygen and at temperature T1; and optionally, adding at least one of an X additive and the N additive to the primary sintered product for mixing and secondary sintering in the presence of oxygen.

The particles B are prepared by a method including the following steps: mixing lithium hydroxide, nickel-cobalt-M precursor material NiₓCo_{y}M_{1-x-y}(OH)₂, an optional Q additive, and an optional N additive for primary sintering in the presence of oxygen and at temperature T2; and optionally, adding at least one of an X additive and the N additive to the primary sintered product for mixing and secondary sintering in the presence of oxygen.

The Q additive, N additive, and X additive are an additive containing element Q, an additive containing element N, and an additive containing element X, respectively; and
x, y, element M, element Q, element X, and element N are as defined in the first aspect of this application.

The temperature T1 is higher than the temperature T2.

Optionally, in the step of preparing the particles A, in the step of sintering in the presence of oxygen, the primary sintering temperature is 700-950°C, optionally 750-900°C, and the secondary sintering temperature is 300-600°C, optionally 350-550°C.

Optionally, in the step of preparing the particles B, in the step of sintering in the presence of oxygen, the primary sintering temperature is 700-900°C, optionally 750-850°C, and the secondary sintering temperature is 300-600°C, optionally 350-550°C.

When the positive electrode active particles (particles A or particles B) provided in the first aspect of this application are coated with an oxide layer, a stepwise sintering method can be used, where firstly a body structure is formed by sintering a precursor for the body structure in an oxidizing atmosphere at a higher temperature (for example, 700-950°C for particles A, and for another example, 700-900°C for particles B), and then an oxide layer is formed by mixing and sintering the body structure and a coating layer additive in an oxidizing atmosphere at a lower temperature (for example, 300-600°C), to prepare the particles A or particles B with a coating layer. In the primary sintering, the granules inside the particles are easily bonded under higher sintering temperature conditions. Thus, large-sized monocrystalline or monocrystalline-like particles (particles A) can be prepared with full bond of the granules at a relatively high primary sintering temperature (T1), and small-sized secondary particles (particles B) can be prepared at a relatively low primary sintering temperature (T2), where fine granules in the secondary particles are not bonded or only partially bonded.

The details of one or more embodiments of this application are set forth in the accompanying drawings and description below. Other features, purposes, and advantages of this application will become apparent from the specification, the accompanying drawings, and the claims.

### BRIEF DESCRIPTION OF DRAWINGS

Reference may be made to one or more of the accompanying drawings for the purpose of better describing and illustrating those embodiments or examples of this application disclosed herein. The additional details or examples used to describe the accompanying drawings should not be considered as limitations on the scope of any one of this application disclosed herein, the currently described embodiments or examples, and the best mode of this application as currently understood. Moreover, throughout the accompanying drawings, the same reference signs represent the same components. In the accompanying drawings:
FIG. 1 is a schematic diagram showing structures of a particle A and a particle B according to an embodiment of this application, where the particle A has a monocrystalline or monocrystalline-like structure, and the particle B is a secondary particle including a plurality of primary particles; and both the particle A and the particle B in (a) have no coating layer, and the particle A and the particle B in (b) each have a coating layer;
FIG. 2 is an SEM image (magnified 1000 times) of a particle A raw material according to an embodiment of this application, with a scale bar of 20 µm;
FIG. 3 is an SEM image (magnified 10000 times) of a particle A raw material according to an embodiment of this application, with a scale bar of 2 µm ;
FIG. 4 is an SEM image (magnified 1000 times) of a particle B raw material according to an embodiment of this application, with a scale bar of 20 µm;
FIG. 5 is an SEM image (magnified 10000 times) of a particle B raw material according to an embodiment of this application, with a scale bar of 2 µm;
FIG. 6 is a cross-sectional SEM image of a particle B raw material according to an embodiment of this application, with a scale bar of 3 µm;
FIG. 7 is a schematic structural diagram of a positive electrode plate according to an embodiment of this application, where Dᵥ50 of particles A is less than Dᵥ50 of particles B and a mass percentage of the particles A is greater than or equal to a mass percentage of the particles B;
FIG. 8 is a schematic structural diagram of a positive electrode plate according to an embodiment of this application, where the positive electrode plate includes particles A, particles B1, and particles B2, Dᵥ50 of the particles A, the particles B1, and the particles B2 sequentially increases and a mass percentage of the particles A is greater than or equal to a sum of mass percentages of the particles B1 and the particles B2;
FIG. 9 is a schematic diagram of a secondary battery according to an embodiment of this application;
FIG. 10 is an exploded view of the secondary battery according to the embodiment of this application in FIG. 9; and
FIG. 11 is a schematic diagram of an electric apparatus using a secondary battery as a power source according to an embodiment of this application.

### Description of reference signs:

5. secondary battery; 51. housing; 52. electrode assembly; 53. cover plate; 6. electric apparatus.

### DESCRIPTION OF EMBODIMENTS

The following discloses in detail embodiments of a positive electrode active material, a positive electrode plate, an electrochemical energy storage apparatus, a secondary battery, an electric apparatus, and a preparation method of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". Further, any one of the following conditions satisfies the condition "A or B": A is true (or present) and B is false (or not present); A is false (or not present) and B is true (or present); or both A and B are true (or present).

In this application, the terms such as "a plurality of", "multiple," and "various,", unless specifically specified, refer to a quantity greater than 2 or equal to 2. For example, "one or more" means one or more than or equal to two.

As used herein, terms such as "a combination thereof", "any combination thereof", and "any combination manner thereof" include all suitable combinations of any two or more of the listed items.

Herein, the meaning of "suitable" in expressions such as "suitable combination manner", "suitable manner", and "any suitable manner" should be determined based on the ability to implement the technical solution in this application.

Herein, it should be understood that "preferred", "better", "optimal", and "appropriate" are only used to describe a better implementation or embodiment, and are not intended to limit the protection scope of this application. If multiple instances of "preferred" appear in a single technical solution, unless otherwise specified, and there are no conflicts, or mutually restrictive relationships, each instance of "preferred" is independent of the other.

In this application, terms such as "further", "furthermore", and "particularly" are used for descriptive purposes to indicate differences in content, but should not be construed as a limitation of the protection scope of this application.

In this application, the terms such as "first", "second", "third", and "fourth" in "first aspect", "second aspect", "third aspect", "fourth aspect", and the like are merely for the purpose of description and should not be understood as any indication or implication of relative importance or quantity, or any implicit indication of importance or quantity of technical features indicated. Moreover, it should be understood that "first", "second", "third", "fourth" and the like are merely for the purpose of non-exhaustive enumeration and description and should not be understood as any closed limitation on the quantity.

In this application, the term "room temperature" generally refers to 4-35°C, and preferably 20°C ± 5°C. In some embodiments of this application, the room temperature refers to 20-30°C.

In this application, in terms of a unit related to a data range, if the unit is only provided after the right endpoint, it indicates that the units for both the left and right endpoints are the same. For example, 3~5 h and 3-5 h both indicate that the unit for the left endpoint "3" and the right endpoint "5" are both h (hours).

The masses or weights of the relevant components mentioned in the specification of the embodiments of this application can not only refer to the content of each component, but also indicate the proportional relation between the masses or weights of the components. Therefore, any content of the relevant components scaled up or down in accordance with the specification of the embodiments of this application falls within the scope of this application. Further, the mass or weight described in the specification of the embodiments of this application may be in µg, mg, g, kg, and other units of mass or weight known in the chemical field.

With the implementation of carbon neutrality and peak carbon strategy goals, the new energy industry has been developing rapidly in recent years. However, current new energy vehicles suffer from low range and poor lifespan, which greatly limits the development of the new energy industry and becomes a stumbling block on the road to achieving carbon neutrality and peak carbon attainment. Therefore, it is urgent to develop an energy storage apparatus with high energy density and long service life.

For positive electrode materials, high-nickel materials (for example, high-nickel ternary materials) characterized by high capacity and low cycle fading have received extensive attention from the industry. However, the current high watt-hour costs of high-nickel materials restrict their promotion and application. One of the effective means to reduce the watt-hour cost of a material is to improve the mass energy density of the material. Currently, the common ways to improve the mass energy density of high-nickel materials (for example, high-nickel ternary materials) mainly include increasing the charge/discharge voltage and increasing the nickel content in the positive electrode material. Due to high prices of positive electrode raw materials, increasing the charge/discharge voltage of a material has become the most attractive way to increase the mass energy density of the material. However, for traditional high-nickel materials (for example, high-nickel ternary materials), increasing the voltage can lead to an increased degree of material cracking during cycling and a decrease in cycle life. In addition, the enhanced oxidation activity of the positive electrode during storage makes the positive electrode prone to intensive chemical reactions with the electrolyte, resulting in a decrease in cell life and an increase in gas generation per unit capacity. These factors collectively make high-nickel materials unstable under high voltage conditions, thereby posing application barriers to a case in which a higher charge/discharge voltage is used to improve the mass energy density. According to the research by the applicant, no relevant reports have been found thus far.

It has been found by the inventors of this application through a large number of experimental explorations that when conventional nickel-rich materials (for example, nickel-rich ternary positive electrode materials) are subjected to charge-discharge cycles under high-voltage conditions ( a voltage of 4.3 V or above, unless otherwise specified), the cell performance manifests as a rapid decrease of the capacity retention rate during cycling with an increase of the number of cycles and an excessive growth of the direct current resistance of the cell. In battery cell calendar life testing, storage capacity decay and gas generation deterioration are observed. The inventors speculate that the intercalation and deintercalation of lithium ions from nickel-rich positive electrode materials (for example, nickel-rich ternary positive electrode materials) during cycling may lead to contraction and expansion of the material lattice. Especially under high-voltage conditions, the degree of material contraction and expansion intensifies, making the material prone to cracking, and side reactions between the positive electrode at the fresh interface generated by the cracking and the electrolyte result in the deterioration of the cell performance. In addition, under the high-voltage conditions, the positive electrode is more oxidizing and is prone to oxidizing the organic solvents in the electrolyte to generate gases such as carbon dioxide and oxygen, resulting in an increase in the gas generation of the cell.

In the context of this application, high-voltage conditions refer to a voltage greater than or equal to 4.3 V, unless otherwise specified.

Based on this, in a first aspect, this application provides a positive electrode active material including particles A and particles B, where molar ratio of element nickel to element lithium (which can be denoted as a nickel-lithium molar ratio R_{Ni/Li}) in each of the particles A and the particles B is independently greater than or equal to 0.33. The particles A have a monocrystalline or monocrystalline-like structure, and the particles B are secondary particles including a plurality of primary particles, where Dᵥ50 of the particles A is less than Dᵥ50 of the particles B, and a mass percentage of the particles A is greater than or equal to a mass percentage of the particles B.

DᵥN denotes a particle size corresponding to a cumulative volume distribution percentage of a material reaching N%, N being a value selected from 0-100.

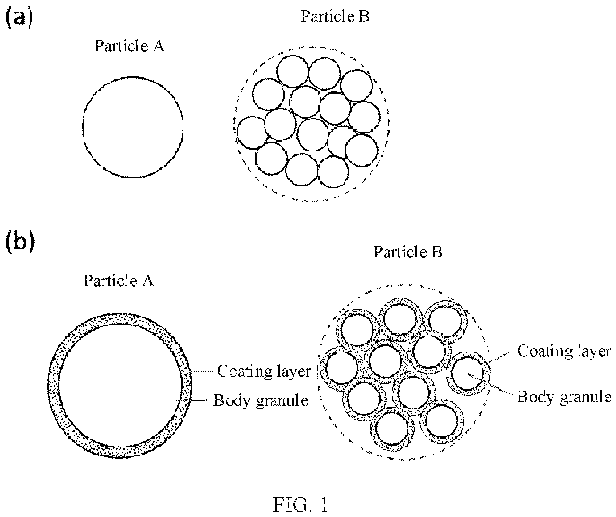

For structures of the particles A and the particles B in the foregoing positive electrode active material, refer to FIG. 1(a).

In this application, "nickel-rich" and "high nickel" have the same meaning and can be used interchangeably to refer to a higher ratio of nickel in a positive electrode active material. Taking NCM811 ternary positive electrode material as an example, the molar ratio of nickel, cobalt, and manganese therein is 80:10:10. Increasing the nickel content in the positive electrode active material is favorable for increasing the energy density, which can improve the battery capacity.

In this application, for the positive electrode active material, the positive electrode material, and the positive electrode plate, the nickel content can be characterized by a molar ratio of element nickel to element lithium. The molar ratio can be referred to as the nickel-lithium molar ratio and can be recorded as R_{Ni/Li}. In this application, each occurrence of R_{Ni/Li} may be independently greater than or equal to 0.33, further, it may be independently greater than or equal to 0.4, and furthermore, it may be independently greater than or equal to 0.5, greater than or equal to 0.6, greater than or equal to 0.7, and greater than or equal to 0.8. In some embodiments of this application, the nickel-lithium molar ratio R_{Ni/Li} may further be selected from any one of the following values or a range defined by any two of the following values: 0.33, 1/3, 0.4, 0.45, 0.5, 0.55, 0.6, 0.65, 0.7, 0.75, 0.8, 0.02, 0.05, 0.9, 0.95, 1, and the like. In some embodiments of this application, the nickel-lithium molar ratio R_{Ni/Li} may further be selected from any one of the following value ranges (any value endpoint here may be independently included or excluded): 0.4-1, 0.5-1, 0.6-1, 0.7-1, 0.8-1, 0.8-0.96, and the like.

In the context of this application, the volume cumulative distribution particle size D_{y}N (where N denotes any value selected from 0-100) may be used to characterize the particle size of the material, referring to the particle size of the material corresponding to a cumulative volume distribution percentage of the material reaching N%, with the volume percentage of particle size less than or equal to DᵥN being N%. DᵥN can be obtained from the volume cumulative distribution curve of the material particle size, and unless otherwise specified, the volume cumulative distribution curve is cumulative from zero on the smaller particle size side. Taking Dᵥ99, Dᵥ90, Dᵥ50, and Dᵥ10 as examples, Dᵥ99 refers to a particle size when the cumulative volume distribution percentage of the material reaches 99%; Dᵥ90 refers to a particle size when the cumulative volume distribution percentage of the material reaches 90%; Dᵥ50 refers to a particle size when the cumulative volume distribution percentage of the material reaches 50%; and Dᵥ10 refers to a particle size when the cumulative volume distribution percentage of the material reaches 10%. Dᵥ50, for example, means that the particle size of particles taking account of 50% of the material volume is less than or equal to Dᵥ50, and the particle size of particles taking account of 50% of the material volume is greater than Dᵥ50. Dᵥ90, for example, means that the particle size of particles taking account of 90% of the material volume is less than or equal to Dᵥ90, and the particle size of particles taking account of 10% of the material volume is greater than Dᵥ90. Dᵥ10, for example, means that the particle size of particles taking account of 10% of the material volume is less than or equal to Dᵥ10, and the particle size of particles taking account of 90% of the material volume is greater than Dᵥ10. Persons skilled in the art can understand the meaning of Dᵥ99, Dᵥ90, Dᵥ50, and Dᵥ10 that can be determined using instruments and methods well-known in the art. For example, Dᵥ99, Dᵥ90, Dᵥ50, and Dᵥ10 can be easily measured in accordance with a particle size distribution laser diffraction method in GB/T 19077-2016 by using a laser particle size analyzer, for example, a laser particle size analyzer of Mastersizer 2000E from Malvern Instruments Ltd. of UK and the LS-909 laser particle size analyzer (Omec).

In this application, monocrystalline-like crystals typically refer to primary particles with sizes greater than 1 µm but with some degree of agglomeration; and monocrystalline crystals typically refer to primary particles with sizes greater than 1 µm and no significant agglomeration.

In this application, "primary particle" and "secondary particle" are well-known terms in the art. "Primary particle" refers to a monocrystalline grain. "Secondary particle" refers to a particle in an agglomerated state formed by the aggregation of two or more primary particles. The primary particles and the secondary particles can be easily distinguished through SEM images taken using a scanning electron microscope.

Conventional high-nickel materials (for example, high-nickel ternary materials) are prone to material cracking during cycling, and the cracking degree tends to deepen at high voltages, leading to a decrease in cycle life. In addition, the enhanced oxidation activity of the positive electrode during storage makes the positive electrode prone to intensive chemical reactions with the electrolyte, resulting in a decrease in cell life and an increase in gas generation per unit capacity. In this application, the positive electrode active material includes high nickel positive electrode materials with different particle sizes, where small particles and large particles are distinguished by Dᵥ50, particles A having a monocrystalline or monocrystalline-like structure are used as the small particles, particles B formed by agglomeration of primary particles are used as the large particles, and the mass percentage of the particles A is also controlled to be higher than that of the particles B. The particles A of a special crystal phase structure have a homogeneous phase system or a near homogeneous bulk, and in the process of lithium deintercalation or intercalation of the material, generation of stress is not likely to occur in the material, and it is not likely to cause cracking of the material under stress, which is therefore more conducive to improving the cycling and storage performance of the cell under high-voltage conditions. The particles B are formed by agglomeration of primary particles, which is conducive to improving the power performance and compacted density. Through the control of the percentage of the particles A relative to the particles B, the percentage of the particles B is less than that of the particles A, which can reduce the stress caused by the contraction and expansion of the lattice of large particles. This helps to prevent the cracking of the positive electrode material under the high-voltage conditions, avoids the formation of new interfaces due to the cracking of the material, and further avoids deterioration of the cell performance and increase in gas generation due to side reactions between the new interfaces and the electrolyte, thus enhancing the cycling stability under the high-voltage conditions and extending the service life of the cell. Further, an increase in the percentage of the small-sized particles A is also conducive to increasing the capacity retention rate of the cell after storage and extending the storage calendar life of the material. In addition, compared to a hybrid system, use of the small-sized particles A in a pure monocrystalline system can significantly reduce the compacted density of the electrode plate using the material and the power performance of the cell. An increase of the compacted density of the electrode plate can increase the volumetric specific capacity of the material, so that the cell in a smaller volume has a longer service life.

In some embodiments, the particle size of the particles A satisfies 2 µm ≤ Dᵥ50 ≤ 5 µm, and Dᵥ50 of the particles A may further be selected from any one of the following particle sizes or a range defined by any two of the following particle sizes: 2 µm, 2.5 µm, 3 µm, 3.5 µm, 4 µm, 4.5 µm, 5 µm, and the like.

In some embodiments, the particle size of the particles B satisfies 5 µm < Dᵥ50 ≤ 25 µm, and Dᵥ50 of the particles B may further be selected from any one of the following particle sizes or a range defined by any two of the following particle sizes: 5.1 µm, 5.2 µm, 5.3 µm, 5.4 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, 15.5 µm, 16 µm, 16.5 µm, 17 µm, 17.5 µm, 18 µm, 18.5 µm, 19 µm, 19.5 µm, 20 µm, 20.5 µm, 21 µm, 21.5 µm, 22 µm, 22.5 µm, 23 µm, 23.5 µm, 24 µm, 24.5 µm, 25 µm, and the like.

In some embodiments, the particle size of the particles A satisfies 2 µm ≤ Dᵥ50 ≤ 5 µm, and the particle size of the particles B satisfies 5 µm < Dᵥ50 ≤ 25 µm.

In this application, the broadening coefficient Span = (Dᵥ90-Dᵥ10)/Dᵥ50 for the material of the multi-particle system is also defined. The broadening coefficient Span may indicate the degree of dispersion of the particle sizes, and a larger broadening coefficient Span indicates a broader particle distribution of the material in terms of distribution.

In some embodiments, the Span value of the particles A is greater than the Span value of the particles B.

In some embodiments, the Span value of the particles A is selected from 0.1-3.0, and may further be selected from 0.1-2.0, with non-limiting examples such as 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, 2.1, 2.2, 2.3, 2.4, 2.5, 2.6, 2.7, 2.8, and 2.9.

The Span value of the particles B is selected from 0.1-3.0, may further be selected from 0.1-2.0, and may furthermore be selected from 1.1-2.0, with non-limiting examples such as 0.1, 0.15, 0.2, 0.25, 0.3, 0.35, 0.4, 0.45, 0.5, 0.55, 0.6, 0.65, 0.7, 0.75, 0.8, 0.85 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, 2.1, 2.2, 2.3, 2.4, 2.5, 2.6, 2.7, 2.8, and 2.

In some embodiments, the Span value of the particles A is selected from 0.1-2.0; and the Span value of the particles B is selected from 0.1-2.0.

In some embodiments, the particle size of the particles B satisfies 8 µm < Dᵥ50 ≤ 20 µm.

With the respective particle sizes of the particles A and the particles B controlled in a relatively appropriate range, it is conducive to better improving the high-voltage tolerance of the positive electrode material, reducing the stress caused by the large particles, thereby better preventing the cracking of the positive electrode material under the high-voltage conditions, enhancing the cycling stability under the high-voltage conditions, avoiding the increase in gas generation, and extending the service life of the cell. Further, it is more conducive to increasing the specific capacity and mass energy density of the positive electrode plate. With a proper combination of particle size grades and broadening coefficients for the large and small particles, a higher compacted density of the electrode plate using the material can be more conducive to increasing the volumetric specific capacity of the material, so that the cell in a smaller volume has a longer service life.

In some embodiments, the particles B include particles B1 and particles B2, and Dᵥ50 of the particles B1 is less than Dᵥ50 of the particles B2.

Further, in some embodiments, the particle size of the particles B1 satisfies 5 µm < Dᵥ50 ≤ 10 µm, and the particle size of the particles B2 satisfies 10 µm < Dᵥ50 ≤ 25 µm.

In some embodiments, the particle size of the particles B1 satisfies 5 µm < Dᵥ50 ≤ 10 µm, and Dᵥ50 of the particles B1 may further be selected from any one of the following particle sizes or a range defined by any two of the following particle sizes: 5.1 µm, 5.2 µm, 5.3 µm, 5.4 µm, 5.5 µm, 6 µm, 6.5 µm, 7 µm 7.5 µm, 8 µm, 8.5 µm, 9 µm, 9.5 µm, 10 µm, and the like.

In some embodiments, the particle size of the particles B2 satisfies 10 µm < Dᵥ50 ≤ 25 µm, and Dᵥ50 of the particles B2 may further be selected from any one of the following particle sizes or a range defined by any two of the following particle sizes: 10.1 µm, 10.2 µm, 10.3 µm, 10.4 µm, 10.5 µm, 11 µm, 11.5 µm, 12 µm, 12.5 µm, 13 µm, 13.5 µm, 14 µm, 14.5 µm, 15 µm, 15.5 µm, 16 µm, 16.5 µm, 17 µm, 17.5 µm, 18 µm, 18.5 µm, 19 µm, 19.5 µm, 20 µm, 20.5 µm, 21 µm, 21.5 µm, 22 µm, 22.5 µm, 23 µm, 23.5 µm, 24 µm, 24.5 µm, 25 µm, and the like.

In some embodiments, the weight percentage of the particles B1 in the particles B may be selected from 50-100%, and may further be selected from any one of the following percentages or a range defined by any two of the following percentages: 50%, 55%, 60%, 65%, 70%, 75%, 80%, 85%, 90%, 95%, and the like.

In some embodiments, the weight percentage of the particles B2 in the particles B may be selected from 0-50%, and may further be selected from any one of the following percentages or a range defined by any two of the following percentages: 5%, 10%, 15%, 20%, 25%, 30%, 35%, 40%, 45%, 50%, and the like.

In some embodiments, the Span value of the particles A may be selected from 0.1-2.0, with non-limiting examples such as 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, and the like.

In some embodiments, the Span value of the particles B1 may be selected from 0.1-2.0, with non-limiting examples such as 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, and the like.

In some embodiments, the Span value of the particles B2 may be selected from 0.1-2.0, with non-limiting examples such as 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, and the like.

In some embodiments, the Span value of the particles A is selected from 0.1-2.0; the Span value of the particles B1 is selected from 0.1-2.0; and the Span value of the particles B2 is selected from 0.1-2.0; where the definition of Span is the same as previously described, Span = (Dᵥ90-Dᵥ10)/Dᵥ50.

On the basis of distinguishing small particles (particles A) from large particles (particles B), the particles B are further divided into particles B1 and particles B2, so that Dᵥ50 of the particles B1 is smaller than Dᵥ50 of the particles B2. In this way, it is possible to include particles in three size grades in the positive electrode active material and provide finer control over the particle size of the larger-sized particles. Further, with a proper control of the percentage of particles with different particle sizes and the broadening coefficient Span to improve the compacted density and increase the specific capacity and mass energy density of the positive electrode plate, a proper control of the percentage of the particles B1 with intermediate sizes can further improve the power performance, prevent overly dense buildup from affecting the infiltration of the electrolyte, and prevent the formation of concentration gradients due to the inability of the electrolyte to come into contact with the internal active materials of the electrode plate, resulting in unfavorable constraints on lithium-ion transport.

In some embodiments, the particles B include particles B1', particles B2', and particles B3', and Dᵥ50 of the particles Bl', particles B2', and particles B3' sequentially increases.

Further, in some embodiments, the particle size of the particles B1' satisfies 8 µm < Dᵥ50 ≤ 12 µm, the particle size of the particles B2' satisfies 12 µm < Dᵥ50 ≤ 15 µm, and the particle size of the particles B3' satisfies 15 µm < Dᵥ50 ≤ 20 µm.

In some embodiments, the particle size of the particles B1' satisfies 8 µm < Dᵥ50 ≤ 12 µm, and Dᵥ50 of the particles B1 may further be selected from any one of the following particle sizes or a range defined by any two of the following particle sizes: 8.1 µm, 8.2 µm, 8.3 µm, 8.4 µm, 8.5 µm, 9 µm, 9.5 µm, 10 µm, 10.5 µm, 11 µm, 11.5 µm, 12 µm, and the like.

In some embodiments, the particle size of the particles B2' satisfies 12 µm < Dᵥ50 ≤ 15 µm, and Dᵥ50 of the particles B2 may further be selected from any one of the following particle sizes or a range defined by any two of the following particle sizes: 12.1 µm, 12.2 µm, 12.3 µm, 12.4 µm, 12.5 µm, 13 µm, 13.5 µm, 14 µm, 14.5 µm, 15 µm, and the like.

In some embodiments, the particle size of the particles B3' satisfies 15 µm < Dᵥ50 ≤ 20 µm, and Dᵥ50 of the particles B2 may further be selected from any one of the following particle sizes or a range defined by any two of the following particle sizes: 15.1 µm, 15.2 µm, 15.3 µm, 15.4 µm, 15.5 µm, 16 µm, 16.5 µm, 17 µm, 17.5 µm, 18 µm, 18.5 µm, 19 µm, 19.5 µm, 20 µm, and the like.

In some embodiments, the weight percentage of the particles B1' in the particles B is selected from 40-80%, and may further be selected from any one of the following percentages or a range defined by any two of the following percentages: 40%, 45%, 50%, 55%, 60%, 65%, 70%, 75%, 80%, and the like.

In some embodiments, the weight percentage of the particles B2' in the particles B is selected from 20-30%, and may further be selected from any one of the following percentages or a range defined by any two of the following percentages: 20%, 21%, 22%, 23%, 24%, 25%, 26%, 27%, 8%, 9%, 30%, and the like.

In some embodiments, the weight percentage of the particles B3' in the particles B is selected from 0-30%, and may further be selected from any one of the following percentages or a range defined by any two of the following percentages: 2%, 4%, 5%, 6%, 8%, 10%, 12%, 15%, 16%, 18%, 20%, 21%, 22%, 23%, 24%, 25%, 26%, 27%, 8%, 9%, 30%, and the like.

In some embodiments, the Span value of the particles A may be selected from 0.1-2.0, with non-limiting examples such as 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, and the like.

In some embodiments, the Span value of the particles B1' may be selected from 0.1-2.0, with non-limiting examples such as 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, and the like.

In some embodiments, the Span value of the particles B2' may be selected from 0.1-2.0, with non-limiting examples such as 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0 and the like.

In some embodiments, the Span value of the particles B3' may be selected from 0.1-2.0, and may further be selected from 0.1-1.4, with non-limiting examples such as 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, and the like.

In some embodiments, the Span value of the particles A is selected from 0.1-1.5, the Span value of the particles B1' is selected from 0.1-1.5, the Span value of the particles B2' is selected from 0.1-1.4, and the Span value of the particles B3' is selected from 0.1-1.4; where the definition of Span is the same as previously described, Span = (Dᵥ90-Dᵥ10)/Dᵥ50.

On the basis of distinguishing small particles (particles A) from large particles (particles B), the particles B are further divided into particles B 1', particles B2', and particles B3' with increasing Dᵥ50, allowing inclusion of particles in four size grades in the positive electrode active material and finer control over the particle size of the larger-sized particles. Further, with a proper control of the percentage of the four particles and the broadening coefficient Span to better improve the compacted density and increase the specific capacity and mass energy density of the positive electrode plate, a proper control of the percentages of the particles B1' and the particles B2' with intermediate sizes can further improve the power performance, prevent overly dense buildup from affecting the infiltration of the electrolyte, and prevent the formation of concentration gradients due to the inability of the electrolyte to come into contact with the internal active materials of the electrode plate, resulting in unfavorable constraints on lithium-ion transport.

In some embodiments, the particles A and the particles B each independently include the following combination of elements NiₓCo_{y}M_{1-x-y}, where x ≥ 0.4, y >_ 0, (1-x-y) >_ 0, and the element M includes one or both of Mn and Al. In some of these embodiments, 0.40 ≤ x ≤ 1.00, 0 ≤ y < 0.15, and (1-x-y) ≥ 0. The foregoing x may be independently selected from any suitable value previously described. In some embodiments, 0.50 ≤ x ≤ 1.00. In some embodiments, 0.60 ≤ x ≤ 1.00. In some embodiments, y > 0; and further, 0 < y < 0.15 may be satisfied, and in this case, the presence of cobalt can improve the battery cycling and rate performance and can also inhibit cation mixing (including lithium-nickel mixing), thereby improving material stability. In some embodiments, (1-x-y) > 0, and in this case, one or both of manganese and aluminum may be present; where the introduction of manganese may otherwise improve battery safety; and the introduction of aluminum may inhibit cation mixing and improve cycling performance. In some embodiments, the positive electrode active material does not contain cobalt, which is conducive to cost reduction.

In some embodiments, y > 0 and (1-x-y) > 0, and in this case, a nickel, cobalt, and M ternary material may be present, where an example of M is at least one of manganese and aluminum, and further is manganese or aluminum. In this case, it is advantageous to achieve excellent overall performance in terms of energy density, battery capacity, rate performance, cycling performance, battery stability, and the like.

In some embodiments, the particles A and the particles B each independently include a material with a chemical formula Liₖ₋ₐQₐ(NiₓCo_{y}M_{1-x-y})_{1-z}N_{z}O_{2-c}X_{c}, where 0.9 ≤ k ≤ 1.1, 0 ≤ a ≤ 0.2, 0.60 ≤ x ≤ 1.00, 0 ≤ y <_ 0.15, 0 ≤ (1-x-y), 0 ≤ z ≤ 0.5, 0 ≤ c ≤ 1, the element M may include one or both of Mn and Al, the element Q may include one or more of Na, K, Rb, and Ca, the element N may include one or more of Al, Ti, Zr, Nb, Sr, Sb, Y, Ba, Co, Mn, Mg, W, Si, Mo, P, and C, and the element X may include one or more of B, F, S, and Cl. In some embodiments, 0.92 ≤ k ≤ 1.08; optionally, 0.95 ≤ k ≤ 1.05; optionally, 0.96 ≤ k ≤ 1.04; optionally, 0.98 ≤ k ≤ 1.02; optionally, 0.99 ≤ k ≤ 1.01; and optionally, k = 1. In some of these embodiments, 0.50 ≤ x ≤ 1.00; optionally, 0.60 ≤ x ≤ 1.00; and optionally, 0.70 ≤ x1 ≤ 1.00. In some other embodiments, 0 ≤ a ≤ 0.2, 0.60 ≤ x < 1.00, 0 < y <_ 0.15 (including cobalt), 0 < (1-x-y) (may include at least one of manganese and aluminum), 0 ≤ z ≤ 0.5, and 0 ≤ c ≤ 1.

In some embodiments, the particles A (or particles B) have a material chemical formula of Li(Ni_{0.8}Co_{0.1}Mn_{0.1})_{0.95}Zr_{0.03}Al_{0.02}O₂, in this case, the Ni/Li molar ratio R_{Ni/Li} is 0.76.

In some embodiments, the nickel-lithium molar ratio R_{Ni/Li} in each of the particles A and the particles B is independently greater than or equal to 0.33. In some embodiments, the nickel-lithium molar ratio R_{Ni/Li} in the particles A is independently greater than or equal to 0.3, and may further be independently greater than or equal to 0.4, greater than or equal to 0.5, greater than or equal to 0.6, greater than or equal to 0.7, and greater than or equal to 0.8. In some embodiments, the nickel-lithium molar ratio R_{Ni/Li} in the particles B is independently greater than or equal to 0.3, and may further be independently greater than or equal to 0.4, greater than or equal to 0.5, greater than or equal to 0.6, greater than or equal to 0.7, and greater than or equal to 0.8. In some embodiments, the nickel-lithium molar ratio R_{Ni/Li} in the particles A and the particles B may further each be independently selected from any one of the following values or a range defined by any two of the following values: 0.33, 1/3, 0.4, 0.45, 0.5, 0.55, 0.6, 0.65, 0.7, 0.75, 0.8, 0.02, 0.05, 0.9, 0.95, 1, and the like. In some embodiments of this application, the nickel-lithium molar ratio R_{Ni/Li} in the particles A and the particles B may further each be independently selected from any one of the following value ranges (any value endpoint here may be independently included or excluded): 0.4-1, 0.5-1, 0.6-1, 0.7-1, 0.8-1, 0.8-0.96, and the like. In some embodiments, the nickel-lithium molar ratio R_{Ni/Li} in the particles A is selected from 0.7-1.0. In some embodiments, the nickel-lithium molar ratio R_{Ni/Li} in the particles B is selected from 0.8-1.0. In some embodiments, the nickel-lithium molar ratio R_{Ni/Li} in the particles B is selected from 0.8-0.96.

Conventional nickel-rich positive electrode materials (for example, nickel-rich ternary positive electrode materials) undergo changes in their unit cell parameters during cycling due to the occurrence of lithium deintercalation or intercalation. The changes in unit cell parameters can induce internal stress within the material. As the number of charge-discharge cycles increases, the internal stress accumulates, leading to phenomena such as structural phase transitions and particle cracking of the material and greatly compromising the reversible cycling of the material. In a high-voltage system, the degree of lithium deintercalation or intercalation in nickel-rich materials (for example, nickel-rich ternary materials) is further increased. In this application, the positive electrode active material may be a conventional nickel-rich ternary positive electrode material. In this application, doping of element N may be further introduced into the ternary positive electrode active material, which can reduce the degree of lattice change of the material and play a role in stabilizing the lattice, thereby improving the cycling performance of the nickel-rich ternary material. In addition, it is also helpful to avoid accelerated side reactions between new interfaces generated by cracking and the electrolyte, which is conducive to reducing the gas generation of the cell.

In some embodiments, the particles A and the particles B may use a positive electrode active material well known in the art and used for batteries. The positive electrode active materials that may be applicable to the particles A and particles B of this application may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Non-limiting examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (or NCM333 for short), LiNi_{0.5}Co_{0.2}Mn_{0.3}O₂ (or NCM523 for short), LiNi_{0.5}Co_{0.25}Mn_{0.25}O₂ (or NCM211 for short), LiNi_{0.6}Co_{0.2}Mn_{0.2}O₂ (or NCM622 for short), and LiNi_{0.8}Co_{0.1}Mn_{0.1}O₂ (or NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to one or more of lithium iron phosphate (for example, LiFePO₄ (or LFP for short)), composite materials of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode active material is any suitable ternary positive electrode material. Non-limiting examples include NCM (nickel-cobalt-manganese ternary material), NCA (nickel-cobalt-aluminum ternary material), and the like. Non-limiting examples of the NCM materials are NCM523, NCM622, NCM811, and the like. The molar ratio of elements nickel, cobalt, and aluminum in the NCA material is typically controlled based on the theoretical value of 80:15:5.

In some embodiments of this application, the true densities of the particles A and the particles B may each be independently greater than 4.0 g/cc.

In some embodiments, the true densities of the particles A and the particles B each are independently selected from 4.0-4.8 g/cc.

In some embodiments, the true density of the particles A each is independently selected from 4.6-4.8 g/cc.

In some embodiments, the true density of the particles B each is independently selected from 4.5-4.8 g/cc.

In some embodiments, the true density of the particles A is 4.6-4.8 g/cc, and the true density of the particles B is selected from 4.6-4.8 g/cc.

As used in this application, "true density" has a meaning well known in the art and refers to a ratio of the mass of a positive electrode active material or positive electrode active particles to the true volume thereof, where the true volume is the actual volume of the solid substance, excluding the volume corresponding to the pores present inside the particles. The unit g/cc may be used. For example, a ratio of a mass in g to a true volume in the corresponding unit cm³ can give a true density value.

In this application, the true density is one of the main factors determining the compacted density of the positive electrode material. Proper control of the true densities of the particles A and the particles B is favorable to increase the volumetric specific capacity and the energy density of the positive electrode plate, so as to better improve the cell performance while alleviating the problem of material cracking under high voltage. For the multi-particle system with the gradation method of this application, a closer particle arrangement of the material indicates a higher theoretically achievable volumetric specific capacity of the positive electrode material.

In some embodiments, the particles A and the particles B each independently include a body structure and an oxide layer enveloping at least a portion of the surface of the body structure;
where,
in some embodiments, the body structure includes a material with a chemical formula Liₖ₁₋ₐ₁Qₐ₁(Niₓ₁Co_{y1}M_{1-x1-y1})_{1-z1}N_{z1}O₂, where 0.9 ≤ k1 ≤ 1.1 (optionally, 0.92 ≤ k1 ≤ 1.08; optionally, 0.95 ≤ k1 ≤ 1.05; optionally, 0.96 ≤ k1 ≤ 1.04; optionally, 0.98 ≤ k1 ≤ 1.02; optionally, 0.99 ≤ k1 ≤ 1.01; and optionally, k1 is equal to 1), 0 ≤ a1 ≤ 0.20, 0.40 ≤ x1 ≤ 1.00 (optionally, 0.50 ≤ x1 ≤ 1.00; optionally, 0.60 ≤ x1 ≤ 1.00; and optionally, 0.70 ≤ x1 ≤ 1.00), 0 ≤ y1 ≤ 0.15, and 0 ≤ (1-xl-yl), 0 ≤ z1 ≤ 0.5, the element Q includes one or more of Na, K, Rb, and Ca, the element M includes one or both of Mn and Al, and the element N includes one or more of Al, Ti, Zr, Nb, Sr, Sb, Y, Ba, Co, Mn, Mg, Si, P, Mo, C, and W.

In some of these embodiments, 0 ≤ a1 ≤ 0.20, 0.60 ≤ x1 < 1.00, 0 < y1 ≤ 0.15, 0 < (1-xl-yl), and 0 ≤ z1 ≤ 0.5.

In some other embodiments thereof, the element N includes one or more of Al, Ti, Zr, Nb, Sr, Sb, Y, Mg, and W.

In some embodiments, the oxide layer includes a material with a chemical formula Liₖ₂₋ₐ₂Q'ₐ₂(Niₓ₂Co_{y2}M'_{1-x2-y2})_{1-z2}N'_{z2}O_{2-c2}X_{c2}, where 0.9 ≤ k2 ≤ 1.1 (optionally, 0.92 ≤ k2 ≤ 1.08; optionally, 0.95 ≤ k2 ≤ 1.05; optionally, 0.96 ≤ k2 ≤ 1.04; optionally, 0.98 ≤ k2 ≤ 1.02; optionally, 0.99 ≤ k2 ≤ 1.01; and optionally, k2 is equal to 1), 0 ≤ a2 ≤ 0.20, 0.40 ≤ x2 ≤ 1.00 (optionally, 0.50 ≤ x2 ≤ 1.00; optionally, 0.60 ≤ x2 ≤ 1.00; and optionally, 0.70 ≤ x2 ≤ 1.00), 0 ≤ y2 ≤ 0.15, 0 ≤ (1-x2-y2), 0 < z2 ≤ 0.5, 0 ≤ c2 ≤ 1, the element Q' includes one or more of Na, K, Rb, and Ca, the element M' includes one or both of Mn and Al, the element N' includes one or more of Al, Ti, Zr, Nb, Sr, Sb, Y, Ba, Co, Mn, Mg, W, Mo, Si, C, and P, and the element X includes one or more of B, Cl, S, and F.

In some of these embodiments, 0 ≤ a2 ≤ 0.20, 0.60 ≤ x2 < 1.00, 0 < y2 ≤ 0.15, 0 < (1-x2-y2), 0 < z2 ≤ 0.5, and 0 ≤ c2 ≤ 1.

In some embodiments, both the particles A and the particles B have an oxide layer (coating layer) as can be seen in FIG. 1(b).

In this application, the chemical formulas of the particles A and the particles B can be measured by an inductively coupled plasma emission spectrometry method.

In this application, the body structure of the positive electrode active material can be doped with the element Q' (for example, Na, K, Rb, and Ca), thereby increasing the lithium ion diffusion coefficient and reducing the lithium-nickel mixing. It is also possible to coat the surface of the positive electrode active material to form an oxide layer doped with a specific element N' on the surface of the particles, which can reduce the reactivity of the surface of the material with the electrolyte, reduce the release of oxygen from the material, improve the structural stability of the active material, improve the ionic conductivity, and also increase the capacity of the material. In addition, with the combination of material particle size design with material structural design, it is also possible to achieve higher specific capacity for the material and reduce the degree of side reactions and phase transitions between the positive electrode material and the electrolyte, enabling the battery to have a lower watt-hour cost and a longer cycle life. Compared to the structural design with a coating layer, the material without a coating layer is likely to have a large number of side reactions with the electrolyte at the interface, resulting in the oxidation of the electrolyte and the generation of gases such as carbon dioxide and oxygen. Additionally, without a coating layer, the layered structure on the surface of the positive electrode active material is more prone to transforming into a rock-salt structure, resulting in the loss of chemical reactivity on the surface of the material.

The oxide layer controlled to have a relatively suitable amount can better improve the structural stability of the material, inhibit the intensification of surface side reactions, and extend the cycle life of the material. When the amount of the oxide layer contained is low, the foregoing effect is not obvious. A high amount of the oxide layer contained may lead to a decrease in capacity of the material.

In some embodiments, Q_{b2}Niₓ₂Co_{y2}M'_{1-x-y} is the same as Q_{b1}Niₓ₁Co_{y1}M_{1-x1-y1}, in this case, the same process can be used for preparation to obtain the particles A and the particles B by sifting.

In some embodiments, the element N' includes one or more of Al, Ti, Zr, Sr, Sb, Mo, Nb, Mg, Y, and W.

In some embodiments, the element N' includes one or more of Al, Ti, Zr, Sr, Sb, W, C, P, and Mo.

In some embodiments, the element N' includes at least one of Al, Zr, Nb, Sr, Sb, Co, Mg, W, and Mo. The oxide layer is doped with elements such as Zr, Al, Mg, W, Mo, Co, Sr, Sb, and Nb, where the elements such as Mg, Ti, Al, and Mo can reduce the amount of lattice deformation of the material during charge-discharge cycles, thereby improving the structural stability of the material.

In some embodiments, the element X includes at least one of B, Cl, S, and F. The elements such as B, Cl, S, and F are doped into the oxide layer, thereby enhancing the capacity and rate performance.

In some embodiments of this application, the thickness of the oxide layer may be 0-100 nm, and further, it may be 1-100 nm or 1-20 nm. The thickness of the oxide layer may further be selected from any one of the following or a range defined by any two of the following: 1 nm, 2 nm, 3 nm, 4 nm, 5 nm, 6 nm, 7 nm, 8 nm, 9 nm, 10 nm, 12 nm, 15 nm, 16 nm, 18 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, and the like.

In some embodiments of this application, the mass percentage of the oxide layer relative to the body structure may be 0.01-5%, further, it may be 0.01-4%, and furthermore, it may be 0.05-4%. The mass percentage of the oxide layer relative to the body structure may further be selected from any one of the following percentages or a range defined by any two of the following percentages: 0.01%, 0.02%, 0.03%, 0.04%, 0.05%, 0.06%, 0.08%, 0.9%, 1%, 1.2%, 1.5%, 1.6%, 1.8%, 2%, 2.5%, 3%, 3.5%, 4%, 4.5%, 5%, and the like.

In some embodiments of this application, the mass percentage of the element N in the oxide layer in the positive electrode active material may be 0.01-4%, further, it may be 0.05-4%, and furthermore, it may be 0.1-4%. The mass percentage of the element N in the oxide layer in the positive electrode active material may further be selected from any one of the following percentages or a range defined by any two of the following percentages: 0.01%, 0.02%, 0.03%, 0.04%, 0.05%, 0.06%, 0.08%, 0.9%, 1%, 1.2%, 1.5%, 1.6%, 1.8%, 2%, 2.5%, 3%, 3.5%, 4%, and the like.

In this application, the thickness of the coating layer in the particles A and the particles B can be measured by a transmission electron microscopy method.

In this application, the mass percentage of the coating layer in the particles A and the particles B can be measured by an inductively coupled plasma emission spectrometry method.

In this application, the mass percentage of the element N in the particles A and the particles B in the positive electrode active material of this application can be measured by an inductively coupled plasma emission spectrometry method.

With proper control of the amount of the surface oxide layer, such as the thickness of the oxide layer, the mass percentage of the oxide layer, the doping amount of the element N, and other parameters, it is possible to better achieve the foregoing doping and coating purposes (through doping, the doping source can uniformly enter into the bulk phase of the material to reduce the contraction and expansion and improve the structural stability; and through coating, the nickel content can be lowered to passivate the interface and reduce the reactivity with the electrolyte), better regulate the chemical reactivity and structural stability of the material, better combine the material particle size design and the material structural design, give the material a higher specific capacity, and reduce the degree of side reactions and phase transitions between the positive electrode material and the electrolyte, enabling the battery to have a lower watt-hour cost and a longer cycle life.

In some embodiments of this application, the free lithium content in the positive electrode active material is less than 3000 ppm in mass ratio.

In some embodiments, the carbonate lithium content in the positive electrode active material of this application is less than 3500 ppm in mass ratio.

In some embodiments, the lithium hydroxide content in the positive electrode active material of this application is less than 3000 ppm in mass ratio. Further, the lithium carbonate content is less than 3500 ppm in mass ratio.

In this application, the mass percentage of the free lithium in the particles A and the particles B in the positive electrode active material of this application can be measured by a free lithium potentiometric titration method.

In this application, proper control of the free lithium (for example, lithium carbonate and lithium hydroxide) content in the positive electrode active material can avoid excessive gas generation during cycling under high-voltage conditions. If the free lithium content is high, acid-base neutralization reactions occur between the free lithium and hydrofluoric acid generated by the decomposition of the electrolyte during cycling under high-voltage conditions, and a large amount of gas is generated, leading to cell swelling and pouch bulging, which is prone to cell safety accidents.

In some embodiments of this application, the ratio I003/I104 of the I003 grain content to the I104 grain content in the positive electrode active material is greater than or equal to 1.2 and is measured as a ratio of areas of characteristic peaks of I003 crystal plane to I104 crystal plane in an XRD pattern.

Optionally, I003/I104 is selected from 1.2-2.

Optionally, I003/I104 is selected from 1.3-2.

Optionally, I003/I104 is selected from 1.3-1.6.

In the application, an X-ray diffraction (XRD) method can be used to test the grain size of the positive electrode active material. Further, the following test parameters are used: preparation of sample using a flat plate sample preparation method, with a test angle in 15-70°.

With proper control of the ratio I003/I104 (for example, greater than or equal to 1.2) of the I003 grain content to the I104 grain content in the positive electrode active material, the degree of lithium-nickel mixing can be better controlled, preventing reduction of the reversible capacity and reduction of the diffusion coefficients of lithium ions resulted from element nickel in an excessive amount occupying lattice sites for element lithium. If cation mixing occurs between lithium ions and divalent nickel, divalent nickel enters lithium ions in this case, which reduces the lithium ion diffusion coefficient and increases the impedance, leading to a decrease in capacity and impairing the cycling performance and storage performance. Generally, a lower degree of mixing implies a more regular arrangement and better cell performance.

In some embodiments of this application, in the particles B, at least some of the primary particles are in directional arrangement along the radial direction.

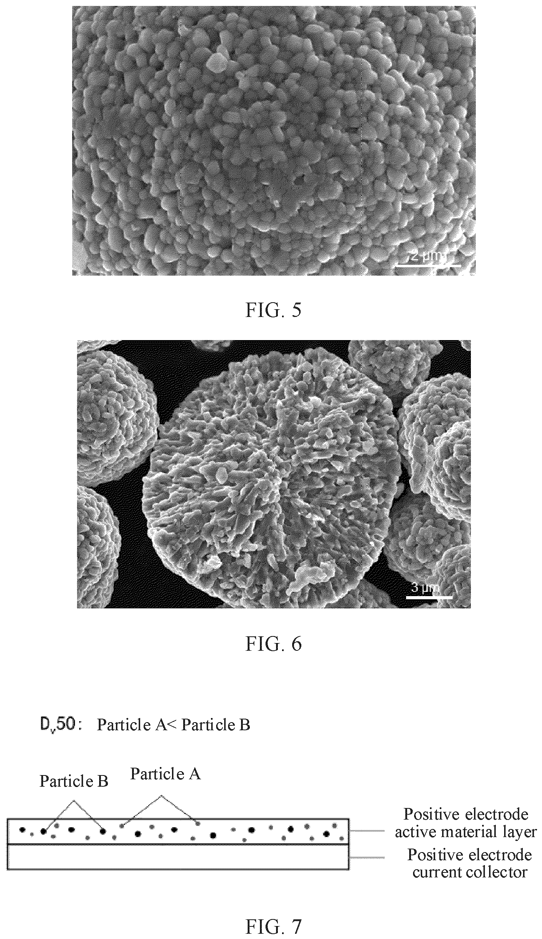

For the secondary spherical particles in this application, with control of parameters such as pH value of the reaction system, concentration of the reaction raw materials, reaction time, and the reaction temperature, a specific directional arrangement of the primary particles can be made along the radial direction (as shown in the test cross-sectional morphology in the SEM of a particle B of FIG. 6), thereby inhibiting the contraction and expansion that may occur under high voltages and avoiding the increase of internal stresses, better preventing the material from breakage under high voltages, and improving the cycling performance. A higher degree of directional arrangement along the radial direction indicates a lower degree of non-directional random arrangement, with more significant improvement in effectiveness.

The positive electrode active material provided in the first aspect of this application is a high-nickel positive electrode material having small particles and large particles with a specific structure, and the percentage of the small particles is higher than that of the large particles. The positive electrode plate prepared has a high mass-specific capacity and excellent structural stability. Further, at the cell level, the mass energy density and cycle life of the cell can be significantly improved, and side reactions with the electrolyte can be reduced, reducing the gas generation of the cell.

In a second aspect, this application provides a positive electrode plate including a positive electrode current collector and a positive electrode active material layer disposed on at least one surface of the positive electrode current collector, the positive electrode active material layer including the positive electrode active material according to the first aspect of this application.

The positive electrode active material according to the first aspect of this application can be used to prepare a positive electrode plate with high nickel content. The particle size and content design of the positive electrode active material can be utilized to prevent the material from cracking under high-voltage conditions and improve the cycling and storage performance of the cell under the high-voltage conditions. Further, the design of the doping and/or the coating structure can be utilized to regulate the chemical reactivity and the structural stability of the material, which can achieve a higher specific capacity for the material and reduce the degree of side reactions and phase transitions between the positive electrode material and the electrolyte, enabling the battery to have a lower watt-hour cost and a longer cycle life.

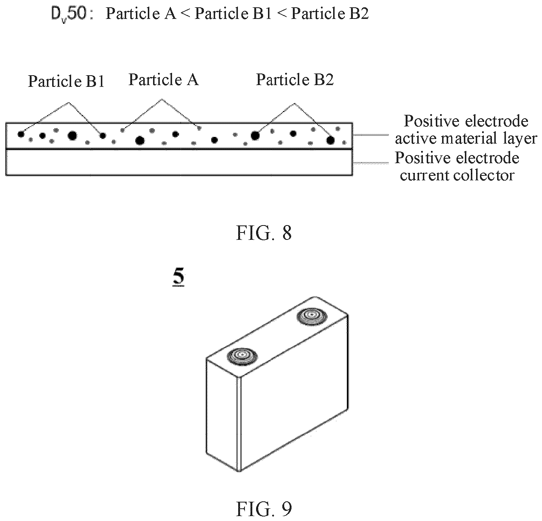

The positive electrode plate includes a positive electrode current collector and a positive electrode film layer disposed on at least one surface of the positive electrode current collector. Reference may be made to FIG. 7 and FIG. 8. The positive electrode active material in FIG. 7 includes particles A and particles B. The positive electrode active material in FIG. 8 includes particles A, particles B1, and particles B2.

As a non-limiting example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode film layer further optionally includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. As a non-limiting example, the conductive agent may include one or more of superconducting carbon, acetylene black, carbon black, Ketjen black, carbon dots, carbon nanotubes, graphene, and carbon nanofibers.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

In some embodiments of this application, the compacted density of the positive electrode plate is 3.3-3.7 g/cm³, with some non-limiting examples such as 3.3 g/cm³, 3.4 g/cm³, 3.5 g/cm³, 3.6 g/cm³, and 3.7 g/cm³.

As used in this application, "compacted density" has a meaning well known in the art and refers to a ratio of the mass of a positive electrode active material to the volume thereof.

In this application, controlling the positive electrode plate at a more suitable compacted density can better prevent the material from cracking under the high-voltage conditions while giving the electrode plate better specific capacity and energy density. It should be understood that the compacted density of the positive electrode plate is also constrained by the true densities of the particles A and particles B contained therein. An increase of the compacted density of the electrode plate can increase the volumetric specific capacity of the material, so that the cell in a smaller volume has a longer service life.

In a third aspect, this application provides an electrochemical energy storage apparatus including the positive electrode plate according to the second aspect, a negative electrode plate, and a separator, where the separator is disposed between the positive electrode plate and the negative electrode plate.

In a fourth aspect, this application provides a secondary battery including at least one of the positive electrode plate according to the second aspect of this application and the electrochemical energy storage apparatus according to the third aspect of this application.

In a fifth aspect, this application provides an electric apparatus including at least one of the positive electrode plate according to the second aspect of this application, the electrochemical energy storage apparatus according to the third aspect of this application, and the secondary battery according to the fourth aspect of this application.

The positive electrode active material according to the first aspect of this application can be used to prepare a positive electrode plate with high nickel content and further prepare an electrochemical energy storage apparatus, a secondary battery, and an electric apparatus. The particle size and content design of the positive electrode active material can be utilized to prevent the material from cracking under high-voltage conditions and improve the cycling and storage performance of the cell under the high-voltage conditions. Further, the design of the doping and/or the coating structure can be utilized to regulate the chemical reactivity and the structural stability of the material, which can achieve a higher specific capacity for the material and reduce the degree of side reactions and phase transitions between the positive electrode material and the electrolyte, enabling the battery to have a lower watt-hour cost and a longer cycle life.

In this application, the secondary battery includes a positive electrode plate (provided according to the second aspect of this application), a negative electrode plate, an electrolyte, and a separator. In the charge-discharge process of the battery, lithium ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the lithium ions to pass through.

### Positive electrode plate

The positive electrode plate in the third aspect and the fourth aspect of this application may be the positive electrode plate according to the second aspect of this application.

### Negative electrode plate

The negative electrode plate includes a negative electrode current collector and a negative electrode film layer disposed on at least one surface of the negative electrode current collector, where the negative electrode film layer includes a negative electrode active material.

As a non-limiting example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. As a non-limiting example, the negative electrode active material may include the following materials: artificial graphite, natural graphite, soft carbon, hard carbon, a silicon-based material, a tin-based material, lithium titanate, and the like. The silicon-based material may be selected from elemental silicon, silicon-oxygen compound, silicon-carbon composite, silicon-nitrogen composite, and silicon alloy. The tin-based material may be selected from elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. The binder may be selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from superconducting carbon, acetylene black, carbon black, Ketjen black, carbon dots, carbon nanotubes, graphene, and carbon nanofiber.

In some embodiments, the negative electrode film layer further optionally includes other promoters such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### Electrolyte

The electrolyte conducts ions between the positive electrode plate and the negative electrode plate. The electrolyte is not particularly limited to any type in this application, and may be selected based on requirements. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from lithium hexafluorophosphate (LiPF₆), lithium tetrafluoroborate (LiBF₄), lithium perchlorate (LiClO₄), lithium hexafluoroarsenate, lithium bis(fluorosulfonyl)imide (LiFSI), lithium bistrifluoromethanesulfonimide (LiTFSI), lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

### Separator

In some embodiments, the secondary battery further includes a separator. The separator is not limited to any particular type in this application, and may be any well-known porous separator with good chemical stability and mechanical stability

In some embodiments, a material of the separator may be selected from glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

### Electrode assembly, electrochemical energy storage apparatus, secondary battery, and electric apparatus

In some embodiments, the positive electrode plate, the negative electrode plate, and the separator may be made into an electrode assembly through winding or lamination.

In some embodiments, the electrochemical energy storage apparatus may include an outer package. The outer package may be used for packaging the electrode assembly and the electrolyte.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

This application does not impose any special limitations on a shape of the secondary battery, and the secondary battery may be cylindrical, rectangular, or of any other shapes. For example, FIG. 9 shows a secondary battery 5 of a rectangular structure as an example.

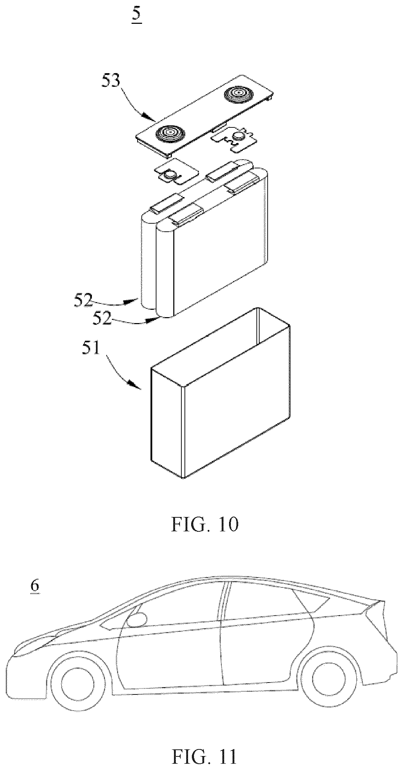

In some embodiments, referring to FIG. 10, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The secondary battery 5 may include one or more electrode assemblies 52, and persons skilled in the art may make choices according to actual requirements.

In addition, this application further provides an electric apparatus. The electric apparatus includes the secondary battery provided in this application. The secondary battery may be used as a power source of the electric apparatus or an energy storage unit of the electric apparatus. The electric apparatus may include a mobile device, an electric vehicle, an electric train, a ship, a satellite system, an energy storage system, or the like, but is not limited thereto. The mobile device may be, for example, a mobile phone or a notebook computer; and the electric vehicle may be, for example, a battery electric vehicle, a hybrid electric vehicle, a plug-in hybrid electric vehicle, an electric bicycle, an electric scooter, an electric golf vehicle, or an electric truck, but is not limited thereto.

As the electric apparatus, a secondary battery pack may be selected according to requirements for using the electric apparatus.

FIG. 11 shows an electric apparatus 6 as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually requires to be light and thin, and a secondary battery may be used as a power source.

In a sixth aspect of this application, a preparation method of positive electrode active material is provided, including the following step: preparing the positive electrode active material by mixing the particles A and the particles B at a preset mass ratio, where the particles A and particles B are as defined in the first aspect of this application.

The particles A may be prepared by a method including the following steps: mixing lithium hydroxide, nickel-cobalt-M precursor material NiₓCo_{y}M_{1-x-y}(OH)₂, an optional Q additive, and an optional N additive for primary sintering in the presence of oxygen and at temperature T1; and optionally, adding at least one of an X additive and the N additive to the primary sintered product for mixing and secondary sintering in the presence of oxygen.

The particles B may be prepared by a method including the following steps: mixing lithium hydroxide, nickel-cobalt-M precursor material NiₓCo_{y}M_{1-x-y}(OH)₂, optionally a Q additive, and optionally an N additive for primary sintering in the presence of oxygen and at temperature T2; and optionally, adding at least one of an X additive and the N additive to the primary sintered product for mixing and secondary sintering in the presence of oxygen.

The Q additive, N additive, and X additive are an additive containing element Q, an additive containing element N, and an additive containing element X, respectively.

Further, the temperature T1 is higher than the temperature T2; and
x, y, element M, element Q, and element N are as defined in the first aspect of this application.

In some embodiments, in the step of preparing the particles A, in the step of sintering in the presence of oxygen, the primary sintering temperature (T1) is 700-950°C, optionally 750-900°C, and the secondary sintering temperature is 300-600°C, optionally 350-550°C. The primary sintering temperature T1 for the particles A may further be any one of the following temperatures or a range defined by any two of the following temperatures: 700°C, 750°C, 800°C, 850°C, 900°C, 950°C, and the like. The secondary sintering temperature may further be any one of the following temperatures or a range defined by any two of the following temperatures: 350°C, 400°C, 450°C, 500°C, 550°C, and the like.

In some embodiments, in the step of preparing the particles B, in the step of sintering in the presence of oxygen, the primary sintering temperature is 700-900°C, optionally 750-850°C, and the secondary sintering temperature is 300-600°C, optionally 350-550°C. The primary sintering temperature may further be any one of the following temperatures or a range defined by any two of the following temperatures: 700°C, 750°C, 800°C, 850°C, 900°C, and the like. The secondary sintering temperature may further be any one of the following temperatures or a range defined by any two of the following temperatures: 350°C, 400°C, 450°C, 500°C, 550°C, and the like.

The positive electrode active particles (particles A or particles B) provided in the first aspect of this application without a surface coating layer can be prepared in a primary sintering method using the corresponding precursor in an oxidizing atmosphere.

When the positive electrode active particles (particles A or particles B) provided in the first aspect of this application are coated with an oxide layer, a stepwise sintering method can be used, where firstly a body structure is formed by sintering a precursor for the body structure in an oxidizing atmosphere at a higher temperature (for example, 700-950°C for particles A, and for another example, 700-900°C for particles B), and then an oxide layer is formed by mixing and sintering the body structure and a coating layer precursor in an oxidizing atmosphere at a lower temperature (for example, 300-600°C), to prepare the particles A or particles B with a coating layer. In the primary sintering, the granules inside the particles are easily bonded under higher sintering temperature conditions. Thus, large-sized monocrystalline or monocrystalline-like particles (particles A) can be prepared with full bond of the granules at a relatively high primary sintering temperature (T1), and small-sized secondary particles (particles B) can be prepared at a relatively low primary sintering temperature (T2), where fine granules in the secondary particles are not bonded or only partially bonded.

In a seventh aspect, this application provides a preparation method of positive electrode slurry. The method includes the following step: preparing the positive electrode slurry by mixing particles A, particles B, and an optional additive, where the particles A and the particles B are as defined in the first aspect of this application.

In some embodiments of this application, the preparation method satisfies one or more of the following features:
(1) the positive electrode slurry has a pH of 11 to 12;
(2) the step of mixing particles A, particles B, and an optional additive is carried out at room temperature (for example, 25°C); and
(3) the step of mixing particles A, particles B, and an optional additive is carried out under stirring conditions, with a stirring speed of 500-2000 r/min and a stirring time of 0.5-5 h.

With synergistical control of the preparation parameters of the positive electrode slurry, such as pH, mixing temperature, stirring speed, and stirring time, the viscosity of the positive electrode slurry can be better controlled and the processing performance can be improved.

The following describes some examples of this application. The examples described below are illustrative and only used for explaining this application, and cannot be construed as limitations on this application. Examples without specifying technical solutions or conditions are made in accordance with the foregoing descriptions, in accordance with technical solutions or conditions described in literature in the field, or in accordance with product instructions. Reagents or instruments used without indicating the manufacturer are conventional products that is commercially available or can be synthesized in a conventional manner from commercially available products.

In the following examples, the room temperature refers to 20-30°C, and further, it may be 25°C.

In the following examples, unless otherwise specified, the positive electrode slurry is applied to the positive electrode current collector using a single-sided coating method, and the negative electrode slurry is applied to the negative electrode current collector using a double-sided coating method. Further, the positive electrode plate in each example is coated with basically the same single-sided coating amount, and the negative electrode plate in each example is coated with basically the same single-sided coating amount. The coating amount of the slurry can be regulated using the coating mass per unit area. It should be understood that the single-side coating method and double-sided coating method in each example are used for illustrative purposes. In preparation of the electrode plates in this application, the positive electrode plate and the negative electrode plate each can be independently prepared using the single-sided coating or double-sided coating method.

In the following examples, "basically the same" in terms of the preparation method means that the parameters remain unchanged except for those specifically indicated to be changed, but it can be understood that adaptive adjustments based on a parameter indicating a change are acceptable. For example, when there are changes in the composition and content of the target product, it is permissible to adaptively adjust the composition and amount of raw materials.

### Example 1

### 1.1. Preparation of positive electrode active material (presence of dopant elements in body structure, no coating layer)

The particle size of the precursor determines the size of the particles of the positive electrode material, and the size and distribution of particles A and particles B can be controlled by regulating the size and distribution of the precursor Means for regulating the size and distribution of the precursor are known to persons skilled in the art.

The ternary precursor (Ni_{0.8}Co_{0.1}Mn_{0.1})OH₂ (with a particle size Dᵥ50 of about 4 µm), LiOH·H₂O, ZrO₂, and Al₂O₃ were mixed at a molar ratio of 0.95:1.04:0.03:0.01 in a mixer, and then sintered at 860°C in an oxygen atmosphere to obtain particles A.

The ternary precursor (Ni_{0.8}Co_{0.1}Mn_{0.1})OH₂ (with a particle size of Dᵥ50 of about 10 µm), LiOH·H₂O, ZrO₂, and Al₂O₃ were mixed at a molar ratio of 0.95:1.04:0.03:0.01 in a mixer, and then sintered at 830°C in an oxygen atmosphere to obtain particles B. The particles A and particles B prepared successively were mixed at a specific mass ratio (see Tables 1 and 2), and a positive electrode active material was prepared and set aside for later use.

### 1.2. Preparation of positive electrode plate

The positive electrode active material, polyvinylidene fluoride, and conductive carbon black were mixed at a mass ratio of 90:5:5, then added with N-methylpyrrolidone (NMP) and stirred for 2 h, and then stirred in a homogenizer at 1000 r/min until well mixed. Then a resulting mixture was uniformly applied to one side surface of a 13 micron-thick aluminum foil current collector, followed by drying in a drying oven at 100°C, cold pressing, and slitting, to obtain a positive electrode plate.

### 1.3. Preparation of electrolyte

Ethylene carbonate (EC) and diethyl carbonate (DEC) were mixed at a volume ratio of 1:2 as a mixed solution to obtain a mixed solvent. Then, in an argon atmosphere glove box, fully dried lithium hexafluorophosphate was dissolved in the mixed solvent and mixed well to obtain an electrolyte. The concentration of lithium salt in the electrolyte was 1 mol/L.

### 1.4. Preparation of negative electrode plate

Negative electrode active material graphite, sodium carboxymethyl cellulose, styrene butadiene rubber, and acetylene black were mixed at a mass ratio of 96:1:1:2, added with deionized water, and stirred well in a blender, and then a slurry was applied on two side surfaces of an 8 micron-thick copper foil, followed by drying in an oven at 100°C, cold pressing, and slitting, to obtain a negative electrode plate.

### 1.5. Preparation of cell

The positive electrode plate, separator, and negative electrode plate were stacked in order from top to bottom to ensure that the positive and negative electrode plates could not be in contact with each other, and then a resulting stack was wound into a jelly roll by using a winding mandrel. The resulting jelly roll was placed into a rectangular aluminum shell, followed by steps such as electrolyte injection, standing, formation, and capacity grading, to prepare a cell.

### Example 2

Example 2 used a method basically the same as that in Example 1, except that the preparation steps of the positive electrode active material were different and the additives for the positive electrode active material were different.

### 2.1. Preparation of positive electrode active material

The ternary precursor (Ni_{0.8}Co_{0.1}Mn_{0.1})OH₂ (with a particle size Dᵥ50 of about 4 µm), LiOH·H₂O, ZrO₂, Al₂O₃, and B₂O₃ were mixed at a molar ratio of 0.95:1.04:0.03:0.01:0.01 in a mixer, and then sintered at 860°C in an oxygen atmosphere to obtain particles A.

The ternary precursor (Ni_{0.8}Co_{0.1}Mn_{0.1})OH₂ (with a particle size Dᵥ50 of about 10 µm), LiOH·H₂O, ZrO₂, Al₂O₃, and B₂O₃ were mixed at a molar ratio of 0.95:1.04:0.03:0.01:0.01 in a mixer, and then sintered at 820°C in an oxygen atmosphere to obtain particles B.

The particles A and particles B prepared were mixed at a specific mass ratio (see Tables 1 and 2), and a positive electrode active material was prepared and set aside for later use.

### Example 3

Example 3 used a method basically the same as that in Example 1, except that the preparation steps of the positive electrode active material were different and the additives for the positive electrode active material were different.

### 3.1. Preparation of positive electrode active material

The ternary precursor (Ni_{0.8}Co_{0.1}Mn_{0.1})OH₂ (with a particle size Dᵥ50 of about 4 µm), LiOH·H₂O, ZrO₂, Sb₂O₅, and Al₂O₃ were mixed at a molar ratio of 0.94:1.04:0.02:0.01:0.01 in a mixer, and then sintered at 860°C in an oxygen atmosphere to obtain particles A.

The ternary precursor (Ni_{0.8}Co_{0.1}Mn_{0.1})OH₂ (with a particle size Dᵥ50 of about 10 µm), LiOH·H₂O, ZrO₂, Sb₂O₅, and Al₂O₃ were mixed at a molar ratio of 0.94:1.04:0.02:0.01:0.01 in a mixer, and then sintered at 820°C in an oxygen atmosphere to obtain particles B.

The particles A and particles B prepared were mixed at a specific mass ratio (see Tables 1 and 2), and a positive electrode active material was prepared and set aside for later use.

### Example 1a to Example 1d. Use of ternary positive electrode material

Example 1a, Example 1b, Example 1c, and Example 1d all used basically the same method as that in Example 1, except that the composition of the positive electrode active material was different and that the particles A and the particles B were made of an NCM ternary positive electrode material self-made in each example.

Example 1a, Example 1b, Example 1c, and Example 1d had different nickel contents (see Table 1) by using ternary precursors with different nickel contents, and the other preparation parameters were the same.

### Example 1a

The ternary precursor (Ni_{0.8}Co_{0.1}Mn_{0.1})OH₂ (with a particle size Dᵥ50 of about 4 µm) and LiOH·H₂O were mixed at a molar ratio of 1:1.04 in a mixer, and then sintered at 860°C in an oxygen atmosphere to obtain particles A.

The ternary precursor (Ni_{0.8}Co_{0.1}Mn_{0.1})OH₂ (with a particle size Dᵥ50 of about 10 µm) and LiOH·H₂O were mixed at a molar ratio of 1:1.04 in a mixer, and then sintered at 820°C in an oxygen atmosphere to obtain particles B.

The particles A and particles B prepared were mixed at a specific mass ratio (see Tables 1 and 2), and a positive electrode active material (Example 4-1) was prepared and set aside for later use. The respective Dᵥ10, Dᵥ50, Dᵥ90, and Span values of the particles A and the particles B in Example 1b, Example 1c, and Example 1d were similar to those in Example 1a.

**Comparative example 1.** A method basically the same as that in Example 1 was used, except that the particles B were replaced by an equal mass of particles A to prepare the positive electrode plate.

**Comparative example 2.** A method basically the same as that in Example 1 was used, except that the particles A were replaced by an equal mass of particles B to prepare the positive electrode plate.

**Comparative example 3.** A method basically the same as that in Example 1 was used, except that the mass percentage of the particles A was less than that of the particles B, and that further, the mass percentage of the particles A in the positive electrode active material was 20%.

**Comparative example 4a.** A method basically the same as that in Example 1a was used, except that the particles B were replaced by an equal mass of particles A (NCM811) to prepare the positive electrode plate.

**Comparative example 4b.** A method basically the same as that in Example 1a was used, except that the particles A were replaced by an equal mass of particles B (NCM811) to prepare the positive electrode plate.

**Table 1**

| No. | Chemical formula of particles A | Chemical formula of particles B |
|---|---|---|
| Example 1 | Li(Ni_{0.8}Co_{0.1}Mn_{0.1})_{0.95}Zr_{0.03}Al_{0.02}O₂ | Li(Ni_{0.8}Co_{0.1}Mn_{0.1})_{0.95}Zr_{0.03}Al_{0.02}O₂ |
| Example 2 | Li(Ni_{0.8}Co_{0.1}Mn_{0.1})_{0.95}Zr_{0.03}Al_{0.02}O₁. ₉₈B_{0.02} | Li(Ni_{0.8}Co_{0.1}Mn_{0.1})_{0.95}Zr_{0.03}Al_{0.02}O_{1.98}B_{0.0 2} |
| Example 3 | Li(Ni_{0.8}Co_{0.1}Mn_{0.1})_{0.94}Zr_{0.02}Al_{0.02}S_{b0}. ₀₂O₂ | Li(Ni_{0.8}Co_{0.1}Mn_{0.1})_{0.94}Zr_{0.02}Al_{0.02}S_{b0.02}O₂ |
| Example 1a | LiNi_{0.8}Co_{0.1}Mn_{0.1}O₂ | LiNi_{0.8}Co_{0.1}Mn_{0.1}O₂ |
| Example 1b | LiNi_{0.6}Co_{0.2}Mn_{0.2}O₂ | LiNi_{0.6}Co_{0.2}Mn_{0.2}O₂ |
| Example 1c | LiNi_{0.5}Co_{0.2}Mn_{0.3}O₂ | LiNi_{0.5}Co_{0.2}Mn_{0.3}O₂ |
| Example 1d | LiNi_{1/3}Co_{1/3}Mn_{1/3}O₂ | LiNi_{1/3}Co_{1/3}Mn_{1/3}O₂ |
| Comparative example 1 | Li(Ni_{0.8}Co_{0.1}Mn_{0.1})_{0.95}Zr_{0.03}Al_{0.02}O₂ | / |
| Comparative example 2 | / | Li(Ni_{0.8}Co_{0.1}Mn_{0.1})_{0.95}Zr_{0.03}Al_{0.02}O₂ |
| Comparative example 3 | Li(Ni_{0.8}Co_{0.1}Mn_{0.1})_{0.95}Zr_{0.03}Al_{0.02}O₂ | Li(Ni_{0.8}Co_{0.1}Mn_{0.1})_{0.95}Zr_{0.03}Al_{0.02}O₂ |
| Comparative example 4a | LiNi_{0.8}Co_{0.1}Mn_{0.1}O₂ | / |
| Comparative example 4b | / | LiNi_{0.8}Co_{0.1}Mn_{0.1}O₂ |

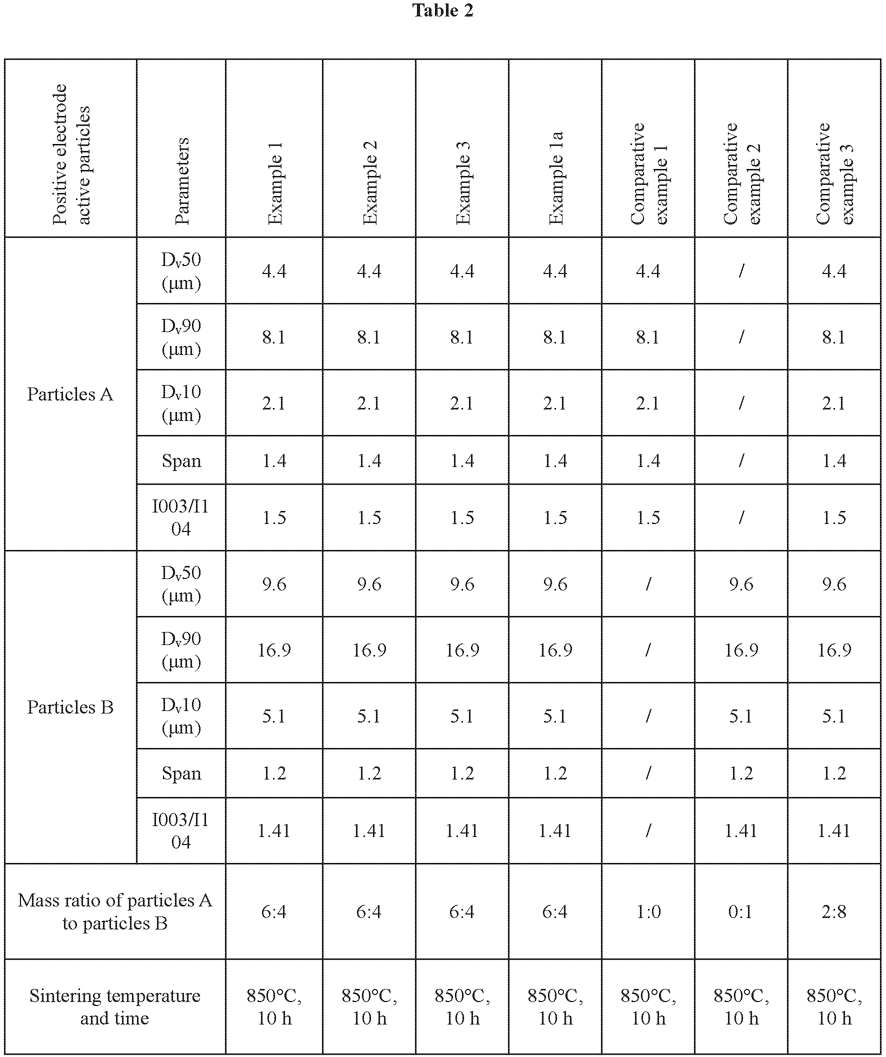

**Examples 4-6.** A method basically the same as that in Example 1 was used, except that the positive electrode active particles included particles B1 and particles B2 and that Dᵥ50, Span, and contents of particles A, B1, and B2 were adjusted.

**Comparative example 5.** A method basically the same as that in Example 4 was used, except that the percentage of the particles B1 was adjusted.

**Comparative example 6.** A method basically the same as that in Example 6 was used, except that Dᵥ50 of the particles B1 and B2 was adjusted.

**Comparative examples 7 and 8.** A method basically the same as that in Example 6 was used, except that combinations of Dᵥ50 and Span of the particles B1 and B2 were adjusted.

For related parameters in Examples 4-6 and Comparative examples 5-8, refer to Table 3.

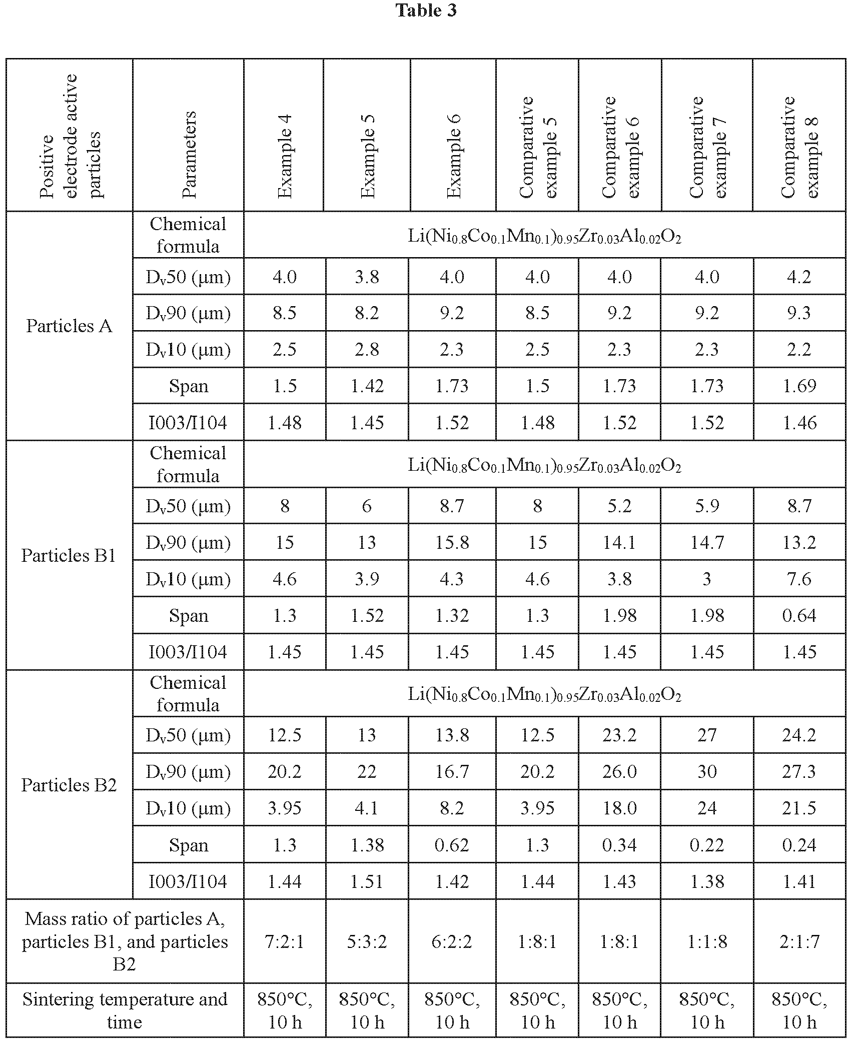

### Example 7

Preparation of positive electrode plate: The particles A, particles B1', particles B2', and particles B3' were mixed well at a mass ratio of 5:2:2:1 to prepare a positive electrode active material, then the active material was mixed with polyvinylidene fluoride and conductive carbon black at a mass ratio of 90:5:5, followed by coating, cold pressing, and die-cutting, to prepare a positive electrode plate. The chemical compositions of the particles A, particles B1', particles B2', and particles B3' were all Li(Ni_{0.8}Co_{0.1}Mn_{0.1})_{0.95}Zr_{0.03}Al_{0.02}O₂.

Other preparation parameters and methods were consistent with those in Example 1.

The positive electrode plate, separator, and negative electrode plate were stacked in order from top to bottom to ensure that the positive and negative electrode plates could not be in contact with each other, and then a resulting stack was wound into a jelly roll by using a winding mandrel. The resulting jelly roll was placed into a rectangular aluminum shell, followed by electrolyte injection, standing, formation, and capacity grading, to prepare a cell.

Further, in Example 7a to Example 7m, on the basis of the foregoing preparation method, the mass ratio of the particles A, particles B1', particles B2', and particles B3' was adjusted from 5:2:2:1 to different amount ratios shown in Table 5, and other preparation steps were the same as those for the mass ratio of 5:2:2:1.

### Example 8

Preparation of positive electrode plate: The particles A, particles B1', particles B2', and particles B3' were mixed well at a mass ratio of 6:4:0.5:0.5 to prepare a positive electrode active material, then the active material was mixed with polyvinylidene fluoride and conductive carbon black at a mass ratio of 90:5:5, followed by coating, cold pressing, and die-cutting, to prepare a positive electrode plate. The chemical compositions of the particles A, particles B1', particles B2', and particles B3' were all Li(Ni_{0.8}Co_{0.1}Mn_{0.1})_{0.95}Zr_{0.03}Al_{0.02}O₂.

Other preparation parameters and methods were consistent with those in Example 1.

The positive electrode plate, separator, and negative electrode plate were stacked in order from top to bottom to ensure that the positive and negative electrode plates could not be in contact with each other, and then a resulting stack was wound into a jelly roll by using a winding mandrel. The resulting jelly roll was placed into a rectangular aluminum shell, followed by electrolyte injection, standing, formation, and capacity grading, to prepare a cell.

In addition, the inventors used the particles A, particles B1', particles B2', and particles B3' in Example 8 and a method basically the same as that in Example 8 and only adjusted the percentage of each type of particle (Example 8a to Example 8m as shown in Table 9) to obtain different positive electrode plates, and then the secondary batteries were prepared.

### Example 9

Preparation of positive electrode plate: The particles A, particles B 1', particles B2', and particles B3' were mixed at a mass ratio of 7:1:1:1 to prepare a positive electrode active material, then the active material was mixed with polyvinylidene fluoride and conductive carbon black at a mass ratio of 90:5:5, followed by coating, cold pressing, and die-cutting, to prepare a positive electrode plate. The chemical compositions of the particles A, particles B1', particles B2', and particles B3' were all Li(Ni_{0.8}Co_{0.1}Mn_{0.1})_{0.95}Zr_{0.03}Al_{0.02}O₂.

Other preparation parameters and methods were consistent with those in Example 1.

The positive electrode plate, separator, and negative electrode plate were stacked in order from top to bottom to ensure that the positive and negative electrode plates could not be in contact with each other, and then a resulting stack was wound into a jelly roll by using a winding mandrel. The resulting jelly roll was placed into a rectangular aluminum shell, followed by electrolyte injection, standing, formation, and capacity grading, to prepare a cell.

For related parameters in Examples 7-9, refer to Table 4 and Table 5.

**Table 4**

| Positive electrode active particles | Parameters | Example 7 | Example 8 | Example 9 |
|---|---|---|---|---|
| Particles A | Dᵥ50 (µm) | 3.8 | 4.1 | 5.0 |
| | Dᵥ90 (µm) | 9.3 | 9.7 | 10.2 |
| | Dᵥ10 (µm) | 2.2 | 2.1 | 2.8 |
| | Span | 1.87 | 1.85 | 1.48 |
| | I003/I104 | 1.41 | 1.38 | 1.45 |
| Particles B1' | Dᵥ50 (µm) | 9.2 | 9.8 | 10.4 |
| | Dᵥ90 (µm) | 16.7 | 17.4 | 18.2 |
| | Dᵥ10 (µm) | 4.3 | 4.4 | 4.3 |
| | Span | 1.35 | 1.33 | 1.34 |
| | I003/I104 | 1.39 | 1.41 | 1.43 |
| Particles B2' | Dᵥ50 (µm) | 13.2 | 13.5 | 12.2 |
| | Dᵥ90 (µm) | 16.7 | 22.3 | 20.5 |
| | Dᵥ10 (µm) | 11.4 | 4.9 | 4.3 |
| | Span | 0.40 | 1.29 | 1.33 |
| | I003/I104 | 1.33 | 1.34 | 1.42 |
| Particles B3' | Dᵥ50 (µm) | 16.2 | 17.20 | 15.30 |
| | Dᵥ90 (µm) | 18.9 | 19.40 | 18.00 |
| | Dᵥ10 (µm) | 13.5 | 14.30 | 11.80 |
| | Span | 0.33 | 0.30 | 0.41 |
| | I003/I104 | 1.41 | 1.42 | 1.38 |
| Mass ratio of particle A, particle B1', particle B2', and particle B3' | | 5:2:2:1 | 6:4:0.5:0.5 | 7:1:1:1 |
| Sintering temperature and time | | 830°C, 8 h | 830°C, 8 h | 830°C, 8 h |

**Table 5**

| No. | Particles A | Particles B1' | Particles B2' | Particles B3' |
|---|---|---|---|---|
| | Parts by weight | Parts by weight | Parts by weight | Parts by weight |
| Example 7a | 5 | 2 | 1 | 2 |
| Example 7b | 5 | 1 | 2 | 2 |
| Example 7c | 5 | 3 | 1 | 1 |
| Example 7d | 5 | 4 | 0.5 | 0.5 |
| Example 7e | 6 | 2 | 1 | 1 |
| Example 7f | 6 | 3 | 0.5 | 0.5 |
| Example 7g | 6 | 1 | 2 | 1 |
| Example 7h | 6.5 | 1 | 1.5 | 1 |
| Example 7i | 7 | 1 | 1 | 1 |
| Example 7j | 7.5 | 1 | 1 | 0.5 |
| Example 7k | 8 | 0.5 | 1 | 0.5 |
| Example 7m | 9 | 0.5 | 0.2 | 0.3 |

The chemical compositions of the positive electrode active particle body structures in Examples 10-13 and Examples 11b, 12b, and 13b were all Li(Ni_{0.8}Co_{0.1}Mn_{0.1})_{0.95}Zr_{0.03}Al_{0.02}O₂.

**Examples 10-12.** A method basically the same as that in Example 1 was used, except that the active particles were provided with a coating layer and that the thickness, mass ratio, and elemental N content were changed, as can be seen in Table 6 and Table 7.

The particles A and particles B were prepared as follows, respectively.

The particles A were prepared by a method including the following steps: mixing lithium hydroxide, nickel-cobalt-M precursor material NiₓCo_{y}M_{1-x-y}(OH)₂ (with a Dᵥ50 of about 4 µm), ZrO₂, and Al₂O₃ for primary sintering in the presence of oxygen and at a temperature of 850°C; and adding an additive containing element N" (see Table 6) to the primary sintered product for secondary sintering in a sintering temperature of 350°C.

The particles B were prepared by a method including the following steps: mixing lithium hydroxide, nickel-cobalt-M precursor material NiₓCo_{y}M_{1-x-y}(OH)₂ (with a Dᵥ50 of about 4 µm), ZrO₂, and Al₂O₃ for primary sintering in the presence of oxygen and at a temperature of 820°C; and optionally, adding an additive containing element N" (see Table 6) to the primary sintered product for secondary sintering in a sintering temperature of 350°C.

M represented manganese, x was 0.8, y was 0.1, and (1-x-y) was 0.1. The element N in the body structure of both the particles A and the particles B included Zr and Al, the element N' in the coating layer of the particles A and the particles B included Zr, Al, and the element N" (see Table 6), and the element N" in the particles A and the particles B were the same. When the element N" was the same as the element N, it leaded to a change in the content.

The element N" referred to other doping elements that were also included with regard to the body structure. With respect to the additives for the element N", when the element N" was Al, Mg, and B, the corresponding additives used in the secondary sintering were Al₂O₃, MgO, and B₂O₃.

**Comparative example 9.** A method basically the same as that in Example 11 was used, except that the thickness of the coating layer was different.

**Example 12b.** A method basically the same as that in Example 12 was used, except that the sintering temperature was different.

**Example 13.** A method basically the same as that in Example 10 was used, except that the sintering temperature was different.

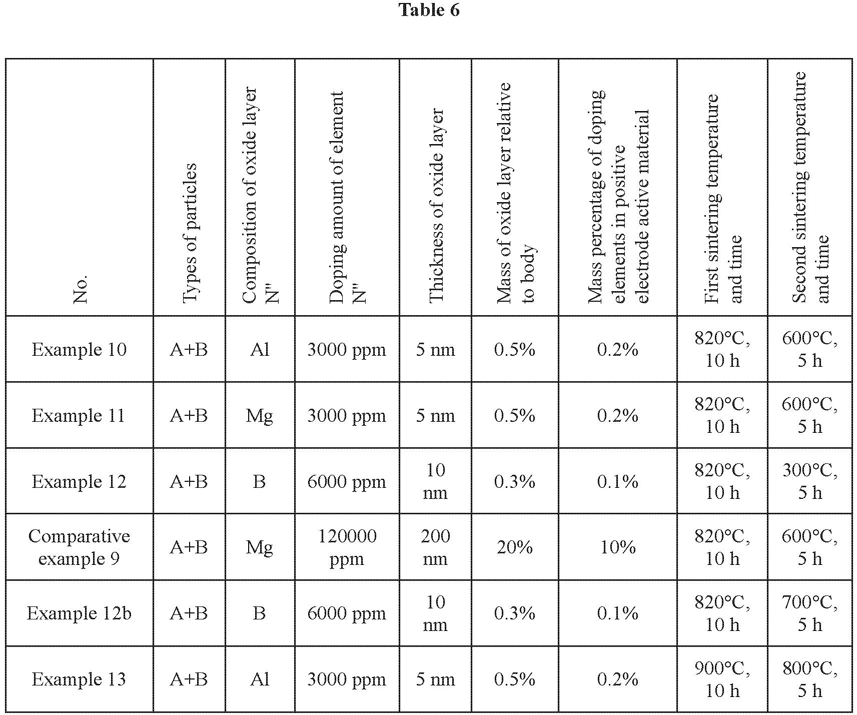

The "doping elements" in Table 6 include all doping elements in the body structure and the oxide layer, including the element N in the body structure and the element N' in the oxide layer.

Examples 14-16 used a method basically the same as that in Example 5, except that the material composition of the positive electrode active material was different.

In Examples 14-16, the combination of particles A+particles B1+particles B2 was used, and the particle size parameters (Dᵥ10, Dᵥ50, Dᵥ90, and Span control) were similar to those in Example 5. The types of doping elements in particles A+particles B1+particles B2 were all the same.

The body structure LiNi_{0.8}Co_{0.1}Mn_{0.1}O₂ in Example 14 had a bulk phase doped with elements Zr and Sr and a coating layer with the elements Al and Mg.

The body structure LiNi_{0.8}Co_{0.1}Mn_{0.1}O₂ in Example 15 had a bulk phase doped with elements Zr, Sr, and Ti and a coating layer with the element Mg.

The body structure LiNi_{0.8}Co_{0.1}Mn_{0.1}O₂ in Example 16 has a bulk phase doped with elements Zr, Sr, and W and a coating layer with the element B.

**Table 7**

| No. | Doping+coating elements |
|---|---|
| Example 14 | Zr/Sr+Al/Mg |
| Example 15 | Zr/Sr/Ti+Mg |
| Example 16 | Zr/Sr/W+B |

### Example 17

An active material composition which was the same as that in Example 1 was used, and the preparation method was basically the same as that in Example 1, except that the primary particles of the precursor were irregularly arranged so that the primary particles of the particles B were basically randomly distributed.

### Test Examples

### 1. Composition test of particles A and particles B

Inductively coupled plasma emission spectrometry was used.

### 2. Particle size test

### (1) Particle size test

### Particle size type: Dᵥ10, Dᵥ50, and Dᵥ90 tests.

Device model: Malvern 2000 (MasterSizer 2000) laser particle size analyzer; reference standard process: GB/T19077-2016/ISO 13320:2009; detailed test process: An appropriate amount of sample under test (with a sample concentration to ensure a shading degree of 8-12%) was taken, added with 20 mL of anhydrous ethanol, and subjected to ultrasonic treatment for 5 min (53KHz/120W) to ensure that the sample was completely dispersed, and then the sample was measured according to GB/T19077-2016/ISO 13320:2009 standard. To prevent the agglomeration during drying from affecting the particle size test, a wet sample after washing was taken for the dispersion test.

### (2) Specific surface area test of positive electrode active material

The nitrogen adsorption specific surface area analysis test method was used, and the BET (Brunauer Emmett Teller) method was used for calculation, where the nitrogen adsorption specific surface area analysis test could be performed using the Tri StarII specific surface area and pore size analyzer from Micromeritics company in USA, with test steps according to GB/T 19587-2004.

Sample under test: the positive electrode active material prepared in each example.

Detailed steps were as follows: The samples under test were dried in a vacuum drying oven at 200°C for 2 hours; then argon was used as the adsorption gas, and the adsorption and desorption curves were measured and plotted by the specific surface area and pore size analyzer with the relative pressures P/P₀ of 0-0.99, where P represents the equilibrium adsorption pressure, and P₀ represents the saturated vapor pressure; and the specific surface area of the positive electrode active materials was calculated through the BET method.

### (3) True density

The true density tester was used for testing, with test steps according to GB/T 24586-2009.

Sample under test: active positive electrode material

Steps: Pre-treatment: A clean and dry sample beaker was placed on the balance, zeroing was performed, and a powder sample was added into the sample beaker, occupying approximately half of the volume of the sample beaker. Mass of the sample was recorded.

The sample beaker with the sample was placed in the true density tester, the test system was sealed, and the helium gas was introduced. A true volume was calculated by measuring the pressure of the gas in the sample chamber and an expansion chamber and based on Bohr's law (PV = nRT) and then a true density was calculated.

The volume of the sample beaker was 3.5 cm³; and the analysis gas was helium gas.

### (4) Thickness of oxide layer (based on TEM)

The material was analyzed using TEM, and the thickness of the coating layer of the material was measured at multiple points to obtain an average value.

### (5) Amount of oxide layer

The amount of the oxide layer was calculated through conversion based on a feed ratio during the first and second sintering processes.

### (6) I003/I104 test

The positive electrode active material was analyzed by X-ray diffractometer according to JIS K 0131-1996.

### (7) Free lithium (including lithium carbonate and lithium hydroxide) content test

The free lithium content in the positive electrode active material was analyzed by a potentiometric titrator according to GB/T 9725-2007.

### 3. Electrode plate

### (1) Compacted density

A positive electrode slurry was applied on one side of a 13 µm aluminum foil with a coating thickness of 110 µm, and after drying was performed, the compacted density and elongation rate data were collected using a cold press machine. A compacted density corresponding to an elongation rate of 0.8% was taken as a test value for the compacted density of the positive electrode active material.

Elongation rate: (length of the electrode plate after cold pressing-length of the electrode plate before cold pressing)/length of the electrode plate before cold pressing × 100%.

### 4 Cell

### (1) Specific capacity (mAh/g)

Gram capacity refers to a ratio of an electric capacity that can be released by an active substance inside a battery to the mass of the active substance.

### (2) Cycling performance: capacity retention rate

At 25°C, one cycle consists of charging and discharging at a constant current followed by a constant voltage at a rate of 1C. The capacity was denoted as C₀ after the first cycle and denoted as Cₙ after the n-th cycle. The capacity retention rate for each cycle was denoted as Cₙ/C₀.

### (3) Gas generation test (gas generation during 40-day storage at 70°C)

At 25°C, the lithium-ion battery was first charged to 4.3 V at a constant current of 1/3C and then charged at a constant voltage with a current of 0.025C to 4.3 V. A drainage method was used to measure the volume of the lithium-ion battery in deionized water as V0, and then the volume of the cell stored at 70°C was measured once every six days and denoted as Vn for the n-th measurement. Volume swelling rate of the lithium-ion battery after storage at 70°C (%) = (Vn-V₀)/V₀ × 100%.

### (4) Storage performance (capacity retention rate after 50-day storage at 60°C)

At 25°C, the cell was charged to 4.3 V at a constant current of 1C, then charged at a constant voltage with a current of 0.05C to 4.3 V, then discharged at a constant current of 1C to 2.8 V, discharged at a constant voltage with a current of 0.05C, and the capacity was measured and recorded as C0.

The cell was charged at a current of 1C to 4.3 V, and then charged at a constant voltage with a current of 0.05C. The fully charged cell was stored in a constant-temperature furnace at 60°C. Every 30 days, the cell was removed and discharged at 25°C with a constant current of 1C to 2.8 V, then discharged at a constant voltage with a current of 0.05C, and the capacity was measured as Cn. The capacity retention rate = Cn/C0.

The second step was repeated to obtain a graph of the capacity retention rate of the battery as a function of time.

### (5) Number of cycles (number of cycles at 80% capacity retention rate at 25°C)

At 25°C, the lithium-ion battery was charged at a constant current of 1C to a voltage of 4.3 V, then charged at a constant voltage of 4.3 V with a current of 0.05C, and next discharged at a constant current of 1C until the final voltage was 2.8 V, and the capacity was denoted as C1. The foregoing steps were sequentially repeated. The capacity for the n-th measurement was denoted as Cn, the capacity retention rate (%) = (n-th discharge capacity/discharge capacity at the first cycle) × 100%, and the cycle continued until the capacity retention rate of the cell decayed to 80%.

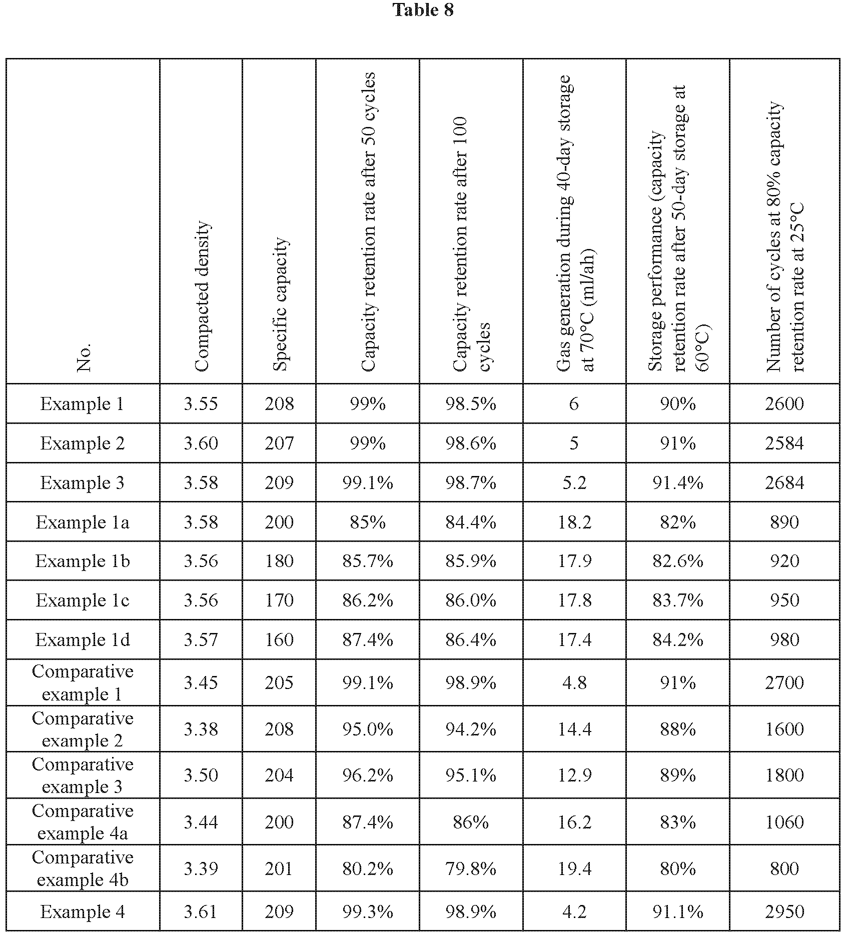

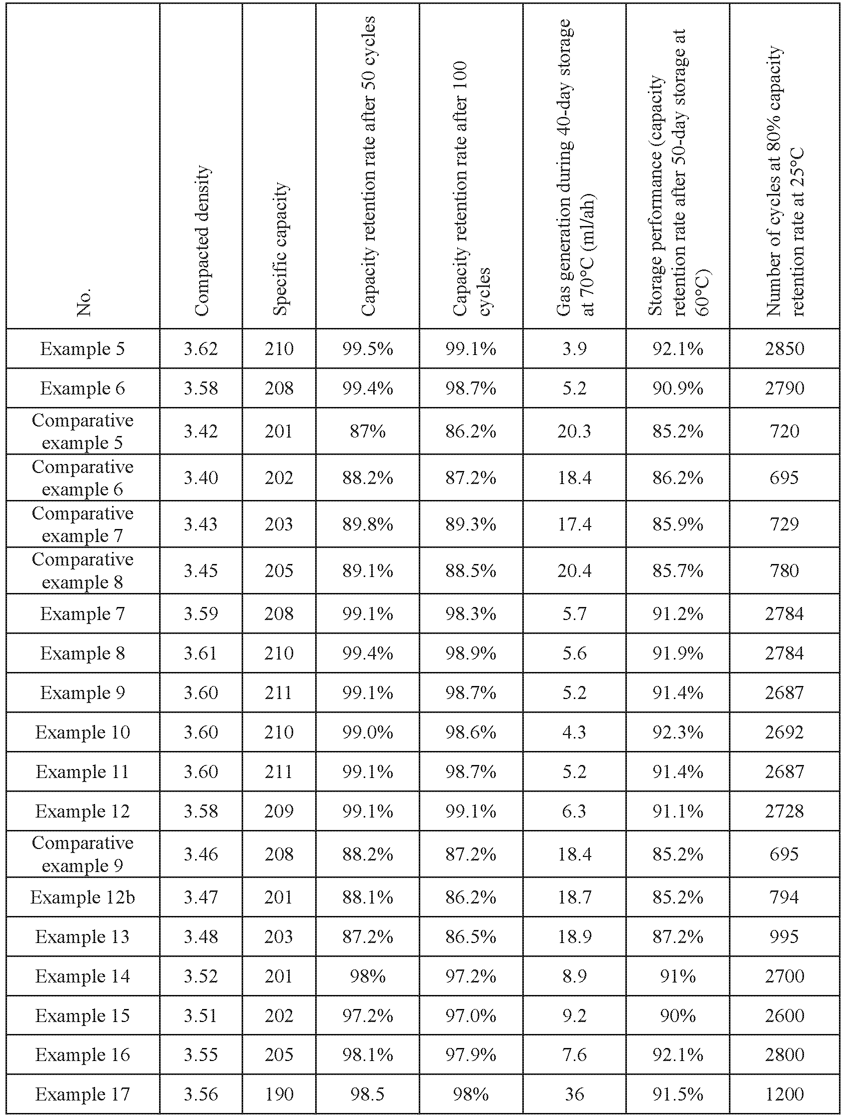

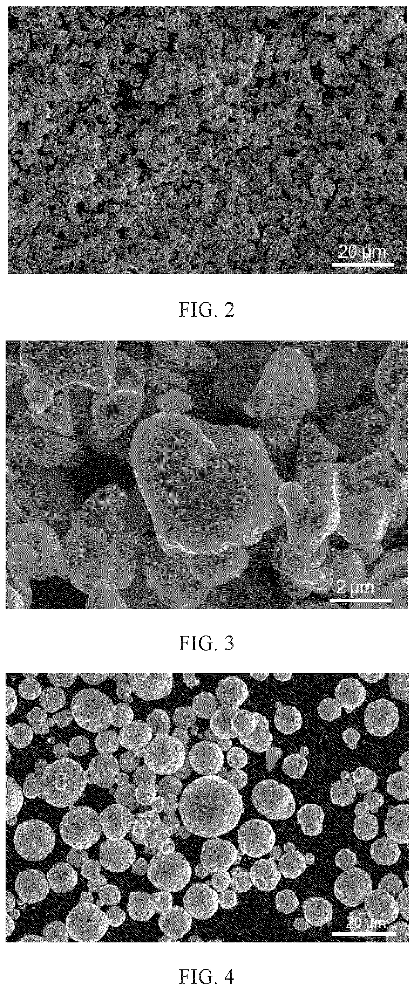

FIG. 2 to FIG. 6 show the test results of the positive electrode active particles in Example 1.

For the results of the comparative analysis between the examples and the comparative examples, refer to the following description.

In Example 1, the primary particles in the particles B were in directional distribution along the radial direction, and the number of cycles at 80% capacity retention rate at 25°C was 2600, with a gas generation of 6 ml/ah for a calendar life of 40 days at 70°C. The inventors speculate that during the charge-discharge cycles, when the primary particles were in directional distribution along the radial direction, stress concentration is less likely to occur within the material.

In Example 17, the primary particles in the particles B were basically randomly distributed and the number of cycles at 80% capacity retention rate at 25°C was 1200, with a gas generation of 36 ml/ah for a calendar life of 40 days at 70°C.

Comparative example 1 included only the particles A without the particles B, and Comparative example 2 included only the particles B without the particles A, and it was found that compared with Example 1, Comparative example 1 and Comparative example 2 had significantly lower cycling performance, storage performance, and significantly greater gas generation during 40-day storage at 70°C. Compared with Example 1a, Comparative example 4a and Comparative example 4b had similar effect results.

In Comparative example 3, the percentage of the particles B was greater than the percentage of the particles A, and as compared with Example 1, in Comparative example 3, the cycling performance and storage performance were significantly degraded, and the gas generation during 40-day storage at 70°C was significantly increased.

In Comparative example 5, the percentage of particles B1 was relatively high, and as compared with Example 4, in Comparative example 5, the cycling performance and storage performance were significantly degraded, and the gas generation during 40-day storage at 70°C was significantly increased.

In Comparative example 6, the percentage of particles B1 was relatively high, and as compared with Example 6, in Comparative example 6, the cycling performance and storage performance were significantly degraded, and the gas generation during 40-day storage at 70°C was significantly increased.

In Comparative example 7, the percentage of the particles B2 was relatively high, and as compared with Example 6, Dᵥ50 of the particles B1 was high, leading to degradation in the cycling performance and storage performance and an increase in high-temperature gas generation.

In Comparative example 8, the percentages of the particles B1 and B2 were greater than that of the particles A, and compared with Example 6, Comparative example 8 leads to degradation in the cycling performance and storage performance and an increase in high-temperature gas generation.

In Comparative example 9, the thickness of the coating layer is large, and compared with Example 11, Comparative example 9 showed degradation in the cycling performance and storage performance and an increase in high-temperature gas generation.

The sintering process was adjusted in Example 12b and Example 13. Compared with Example 12, Example 12b showed degradation in the cycling performance and storage performance and an increase in high-temperature gas generation, and compared with Example 10, Example 13 showed degradation in the cycling performance and storage performance and an increase in high-temperature gas generation.

**Table 9**

| No. | Particles A | Particles B1' | Particles B2' | Particles B3' | Cycles at 25°C (80%) | Gas generation during 40-day storage at 70°C (ml/ah) |
|---|---|---|---|---|---|---|
| | Parts by weight | Parts by weight | Parts by weight | Parts by weight | | |
| Example 8a | 5 | 2 | 1 | 2 | 2600 | 12.7 |
| Example 8b | 5 | 1 | 2 | 2 | 2650 | 11.8 |
| Example 8c | 5 | 3 | 1 | 1 | 2780 | 12.5 |
| Example 8d | 5 | 4 | 0.5 | 0.5 | 2600 | 12.3 |
| Example 8e | 6 | 2 | 1 | 1 | 2812 | 10.6 |
| Example 8f | 6 | 3 | 0.5 | 0.5 | 2841 | 10.4 |
| Example 8g | 6 | 1 | 2 | 1 | 2844 | 10.7 |
| Example 8h | 6.5 | 1 | 1.5 | 1 | 2850 | 9.4 |
| Example 8i | 7 | 1 | 1 | 1 | 2933 | 9.0 |
| Example 8j | 7.5 | 1 | 1 | 0.5 | 2954 | 8.9 |
| Example 8k | 8 | 0.5 | 1 | 0.5 | 3000 | 7.5 |
| Example 8m | 9 | 0.5 | 0.2 | 0.3 | 3100 | 6.8 |

In Table 9, the relative percentages of the particles A, particles B1', particles B2', and particles B3' were adjusted in Example 8a to Example 8m, all of which showed superior cycling performance with relatively low gas generation during storage.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. The foregoing embodiments only represent several implementations of this application, and the descriptions thereof are detailed but should not be construed as limitations on the patent scope of this application. In addition, without departing from the essence of this application, various modifications made to the embodiments that can be conceived by persons skilled in the art, and other manners constructed by combining some of the constituent elements in the embodiments are also included in the scope of this application. It should be noted that persons of ordinary skill in the art may further make several modifications and improvements without departing from the concept of this application, and these modifications and improvements also fall within the protection scope of this application. Therefore, the protection scope of this application should be subject to the appended claims, and the specification and the accompanying drawings may be used to explain the contents of the claims.

## Claims

1. A positive electrode active material comprising particles A and particles B, wherein a molar ratio R_{Ni/Li} of element nickel to element lithium in each of the particles A and the particles B is independently greater than or equal to 0.33;
the particles A have a monocrystalline or monocrystalline-like structure, and the particles B are secondary particles comprising a plurality of primary particles, wherein Dᵥ50 of the particles A is less than Dᵥ50 of the particles B, and a mass percentage of the particles A is greater than or equal to a mass percentage of the particles B; and
DᵥN denotes a particle size corresponding to a cumulative volume distribution percentage of a material reaching N%, N being a value selected from 0-100.

2. The positive electrode active material according to claim 1, wherein the particle size of the particles A satisfies 2 µm ≤ Dᵥ50 ≤ 5 µm, and the particle size of the particles B satisfies 5 µm < Dᵥ50 ≤ 25 µm,
optionally, Span value of the particles A is greater than Span value of the particles B; wherein Span = (Dᵥ90-Dᵥ10)/Dᵥ50;
optionally, the Span value of the particles A is selected from 0.1-3.0; and the Span value of the particles B is selected from 0.1-3.0; and
optionally, the particle size of the particles B satisfies 8 µm < Dᵥ50 ≤ 20 µm.

3. The positive electrode active material according to claim 1 or 2, wherein the particles B comprise particles B1 and particles B2, wherein the particle size of the particles B1 satisfies 5 µm < Dᵥ50 ≤ 10 µm, and the particle size of the particles B2 satisfies 10 µm < Dᵥ50 ≤ 25 µm;
optionally, the weight percentage of the particles B1 in the particles B is selected from 50-100%;
optionally, the weight percentage of the particles B2 in the particles B is selected from 0-50%; and
optionally, the Span value of the particles A is selected from 0.1-2.0; the Span value of the particles B1 is selected from 0.1-2.0; and the Span value of the particles B2 is selected from 0.1-2.0; wherein Span = (Dᵥ90-Dᵥ10)/Dᵥ50.

4. The positive electrode active material according to claim 1 or 2, wherein the particles B comprise particles B1', particles B2', and particles B3', wherein the particle size of the particles B1' satisfies 8 µm < Dᵥ50 ≤ 12 µm, the particle size of the particles B2' satisfies 12 µm < Dᵥ50 ≤ 15 µm, and the particle size of the particles B3' satisfies 15 µm < Dᵥ50 ≤ 20 µm;
optionally, the weight percentage of the particles B1' in the particles B is selected from 40-80%;
optionally, the weight percentage of the particles B2' in the particles B is selected from 20-30%;
optionally, the weight percentage of the particles B3' in the particles B is selected from 0-30%; and
optionally, the Span value of the particles A is selected from 0.1-2.0; the Span value of the particles B1' is selected from 0.1-2.0; the Span value of the particles B2' is selected from 0.1-2.0; and the Span value of the particles B3' is selected from 0.1-2.0; wherein Span = (Dᵥ90-Dᵥ10)/Dᵥ50.

5. The positive electrode active material according to any one of claims 1 to 4, wherein the particles A and the particles B each independently comprise the following combination of elements NiₓCo_{y}M_{1-x-y}, wherein x ≥ 0.4, y >_ 0, (1-x-y) >_ 0, and the element M comprises one or both of Mn and Al;
optionally, 0.40 ≤ x ≤ 1.00, 0 ≤ y <_ 0.15, and (1-x-y) >_ 0;
optionally, 0.50 ≤ x ≤ 1.00; and optionally, 0.60 ≤ x ≤ 1.00;
optionally, y > 0; and optionally, 0 < y < 0.15;
optionally, (1-x-y) > 0;
optionally, y > 0 and (1-x-y) > 0;
optionally, the particles A and the particles B each independently comprise a material with a chemical formula Liₖ₋ₐQₐ(NiₓCo_{y}M_{1-x-y})_{1-z}N_{z}O_{2-c}X_{c}, wherein 0.9 ≤ k ≤ 1.1, 0 ≤ a ≤ 0.2, 0.40 ≤ x ≤ 1.00, 0 ≤ y < 0.15, 0 ≤ (1-x-y), 0 ≤ z ≤ 0.5, 0 ≤ c ≤ 1, the element M comprises one or both of Mn and Al, the element Q comprises one or more of Na, K, Rb, and Ca, the element N comprises one or more of Al, Ti, Zr, Nb, Sr, Sb, Y, Ba, Co, Mn, Mg, W, Si, Mo, P, and C, and the element X comprises one or more of B, F, S, and Cl;
optionally, 0.92 < k < 1.08; optionally, 0.95 ≤ k ≤ 1.05; optionally, 0.96 ≤ k ≤ 1.04; optionally, 0.98 ≤ k ≤ 1.02; optionally, 0.99 ≤ k ≤ 1.01; and optionally, k = 1;
optionally, 0.50 ≤ x ≤ 1.00; optionally, 0.60 ≤ x ≤ 1.00; and optionally, 0.70 ≤ x1 ≤ 1.00; and
optionally, 0 ≤ a ≤ 0.2, 0.60 ≤ x < 1.00, 0 < y ≤ 0.15, 0< (1-x-y), 0 ≤ z ≤ 0.5, and 0 ≤ c ≤ 1.

6. The positive electrode active material according to any one of claims 1 to 5, wherein the nickel-lithium molar ratio R_{Ni/Li} in each of the particles A and the particles B is independently greater than or equal to 0.4;
optionally, the nickel-lithium molar ratio R_{Ni/Li} in each of the particles A and the particles B is independently greater than or equal to 0.5;
optionally, the nickel-lithium molar ratio R_{Ni/Li} in each of the particles A and the particles B is independently greater than or equal to 0.6;
optionally, the nickel-lithium molar ratio R_{Ni/Li} in each of the particles A and the particles B is independently greater than or equal to 0.7;
optionally, the nickel-lithium molar ratio R_{Ni/Li} in each of the particles A and the particles B is independently greater than or equal to 0.8;
optionally, the nickel-lithium molar ratio R_{Ni/Li} in the particles A is selected from 0.7-1.0;
optionally, the nickel-lithium molar ratio R_{Ni/Li} in the particles B is selected from 0.8-1.0; and
optionally, the nickel-lithium molar ratio R_{Ni/Li} in the particles B is selected from 0.8-0.96.

7. The positive electrode active material according to any one of claims 1 to 6, wherein true densities of the particles A and the particles B each are independently greater than 4.0 g/cc;
optionally, the true densities of the particles A and the particles B each are independently selected from 4.0-4.8 g/cc;
optionally, the true density of the particles A each is independently selected from 4.6-4.8 g/cc; and
optionally, the true density of the particles B each is independently selected from 4.5-4.8 g/cc.

8. The positive electrode active material according to any one of claims 1 to 6, wherein the particles A and the particles B each independently comprise a body structure and an oxide layer enveloping at least a portion of the surface of the body structure;
wherein
the body structure comprises a material with a chemical formula Liₖ₁₋ₐ₁Qₐ₁(Niₓ₁Co_{y1}M_{1-x1-y1})_{1-z1}N_{z1}O₂, wherein 0.9 ≤ k1 ≤ 1.1, 0 ≤ a1 ≤ 0.20, 0.40 ≤ x1 ≤ 1.00, 0 ≤ y1 ≤ 0.15, 0 ≤ (1-x1-y1), 0 ≤ z1 ≤ 0.5, the element Q comprises one or more of Na, K, Rb, and Ca, the element M comprises one or both of Mn and Al, and the element N comprises one or more of Al, Ti, Zr, Nb, Sr, Sb, Y, Ba, Co, Mn, Mg, Si, P, Mo, C, and W;
optionally, 0.92 ≤ k1 ≤ 1.08; optionally, 0.95 ≤ k1 ≤ 1.05; optionally, 0.96 ≤ k1 ≤ 1.04; optionally, 0.98 ≤ k1 ≤ 1.02; optionally, 0.99 ≤ k1 ≤ 1.01; and optionally, k1 is equal to 1;
optionally, 0.50 ≤ x1 ≤ 1.00; optionally, 0.60 ≤ x1 ≤ 1.00; and optionally, 0.70 ≤ x1 ≤ 1.00;
optionally, the element N comprises one or more of Al, Ti, Zr, Nb, Sr, Sb, Y, Mg, and W;
optionally, 0 ≤ a1 ≤ 0.20, 0.60 ≤ x1 < 1.00, 0 < y1 ≤ 0.15, 0 < (1-x1-y1), and 0 ≤ z1 ≤ 0.5;
the oxide layer comprises a material with a chemical formula Liₖ₂₋ₐ₂Q'ₐ₂(Niₓ₂Co_{y2}M'_{1-x2-y2})_{1-z2}N'_{z2}O_{2-c2}X_{c2}, wherein 0.9 ≤ k2 ≤ 1.1, 0 ≤ a2 ≤ 0.20, 0.40 ≤ x2 ≤ 1.00, 0 ≤ y2 ≤ 0.15, 0 ≤ (1-x2-y2), 0 < z2 ≤ 0.5, 0 ≤ c2 ≤ 1, the element Q' comprises one or more of Na, K, Rb, and Ca, the element M' comprises one or both of Mn and Al, the element N' comprises one or more of Al, Ti, Zr, Nb, Sr, Sb, Y, Ba, Co, Mn, Mg, W, Mo, Si, C, and P, and the element X comprises one or more of B, Cl, S, and F;
optionally, 0.92 ≤ k2 ≤ 1.08; optionally, 0.95 ≤ k2 ≤ 1.05; optionally, 0.96 ≤ k2 ≤ 1.04; optionally, 0.98 ≤ k2 ≤ 1.02; optionally, 0.99 ≤ k2 ≤ 1.01; and optionally, k2 is equal to 1;
optionally, 0.50 ≤ x2 ≤ 1.00; optionally, 0.60 ≤ x2 ≤ 1.00; and optionally, 0.70 ≤ x2 ≤ 1.00;
optionally, Q'ₐ₂Niₓ₂Co_{y2}M'_{1-x-y} is the same as Qₐ₁Niₓ₁Co_{y1}M_{1-x1-y1};
optionally, the element N' comprises one or more of Al, Ti, Zr, Sr, Sb, Mo, Nb, Mg, Y, and W; and
optionally, 0 ≤ a2 ≤ 0.20, 0.60 ≤ x2 < 1.00, 0 < y2 ≤ 0.15, 0 < (1-x2-y2), 0 < z2 ≤ 0.5, and 0 ≤ c2 ≤ 1.

9. The positive electrode active material according to claim 8, wherein the thickness of the oxide layer is 0-100 nm;
optionally, the thickness of the oxide layer is 1-100 nm; and
optionally, the thickness of the oxide layer is 1-20 nm.

10. The positive electrode active material according to claim 8 or 9, wherein a mass percentage of the oxide layer relative to the body structure is 0.01-5%; and
optionally, the mass percentage of the oxide layer relative to the body structure is 0.05-4%.

11. The positive electrode active material according to any one of claims 8 to 10, wherein a mass percentage of the element N in the oxide layer in the positive electrode active material is 0.01-4%; and
optionally, the mass percentage of the element N in the oxide layer in the positive electrode active material is 0.05-4%.

12. The positive electrode active material according to any one of claims 1 to 11, wherein an average specific surface area value of the positive electrode active material is 0.3-1.5 cm²/g.

13. The positive electrode active material according to any one of claims 1 to 12, wherein the free lithium content in the positive electrode active material is less than 3000 ppm in mass ratio.

14. The positive electrode active material according to any one of claims 1 to 13, wherein the ratio I003/I104 of the I003 grain content to the I104 grain content in the positive electrode active material is greater than or equal to 1.2 and is measured as a ratio of areas of characteristic peaks of I003 crystal plane to I104 crystal plane in an XRD pattern;
optionally, I003/I104 is selected from 1.2-2;
optionally, I003/I104 is selected from 1.3-2; and
optionally, I003/I104 is selected from 1.3-1.6.

15. The positive electrode active material according to any one of claims 1 to 14, wherein in the particles B, at least some of the primary particles are in directional arrangement along the radial direction.

16. A positive electrode plate comprising a positive electrode current collector and a positive electrode active material layer disposed on at least one surface of the positive electrode current collector, the positive electrode active material layer comprising the positive electrode active material according to any one of claims 1 to 15.

17. The positive electrode plate according to claim 16, wherein a compacted density of the positive electrode plate is 3.3-3.7 g/cm³.

18. An electrochemical energy storage apparatus comprising the positive electrode plate according to claim 16 or 17, a negative electrode plate, and a separator, wherein the separator is disposed between the positive electrode plate and the negative electrode plate.

19. A secondary battery comprising at least one of the positive electrode plate according to claim 16 or 17 and the electrochemical energy storage apparatus according to claim 18.

20. An electric apparatus comprising at least one of the positive electrode plate according to claim 16 or 17, the electrochemical energy storage apparatus according to claim 18, and the secondary battery according to claim 19.

21. A preparation method of positive electrode active material, comprising the following steps: preparing the positive electrode active material by mixing the particles A and the particles B at a preset mass ratio, wherein the particles A and particles B are as defined according to any one of claims 1 to 15;
the particles A are prepared by a method comprising the following steps: mixing lithium hydroxide, nickel-cobalt-M precursor material NiₓCo_{y}M_{1-x-y}(OH)₂, an optional Q additive, and an optional N additive for primary sintering in the presence of oxygen and at temperature T1; and optionally, adding at least one of an X additive and the N additive to the primary sintered product for mixing and secondary sintering in the presence of oxygen;
the particles B are prepared by a method comprising the following steps: mixing lithium hydroxide, nickel-cobalt-M precursor material NiₓCo_{y}M_{1-x-y}(OH)₂, an optional Q additive, and an optional N additive for primary sintering in the presence of oxygen and at temperature T2; and optionally, adding at least one of an X additive and the N additive to the primary sintered product for mixing and secondary sintering in the presence of oxygen;
wherein the Q additive, N additive, and X additive are an additive containing element Q, an additive containing element N, and an additive containing element X, respectively;
x, y, element M, element Q, element X, and element N are as defined according to claim 5;
the temperature T1 is higher than the temperature T2;
optionally, in the step of preparing the particles A, in the step of sintering in the presence of oxygen, the primary sintering temperature is 700-950°C, optionally 750-900°C, and the secondary sintering temperature is 300-600°C, optionally 350-550°C; and
optionally, in the step of preparing the particles B, in the step of sintering in the presence of oxygen, the primary sintering temperature is 700-900°C, optionally 750-850°C, and the secondary sintering temperature is 300-600°C, optionally 350-550°C.
